(19) Europäisches Patentamt
European Patent Office
Office européen des brevets

(11) EP 3 943 257 A1

(12) EUROPEAN PATENT APPLICATION
published in accordance with Art. 153(4) EPC

(43) Date of publication:
**26.01.2022 Bulletin 2022/04**

(21) Application number: **19922184.7**

(22) Date of filing: **22.03.2019**

(51) International Patent Classification (IPC):
***B25J 13/08** (2006.01)* ***B25J 15/08** (2006.01)*

(52) Cooperative Patent Classification (CPC):
**B25J 13/08; B25J 15/08**

(86) International application number:
**PCT/JP2019/012186**

(87) International publication number:
**WO 2020/194393 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **OMRON Corporation**
**Shiokoji-dori, Shimogyo-ku,**
**Kyoto-shi**
**Kyoto 600-8530 (JP)**

(72) Inventors:
- **KAWAKAMI, Shinji**
**Kyoto-shi, Kyoto 600-8530 (JP)**
- **KARAKO, Yukihisa**
**Kyoto-shi, Kyoto 600-8530 (JP)**

(74) Representative: **SONN Patentanwälte OG**
**Riemergasse 14**
**1010 Wien (AT)**

# (54) ROBOT HAND, ROBOT HAND CONTROL METHOD, AND PROGRAM

(57) A robot hand, and a robot hand control method and program are provided that are capable of performing an assembly task at high speed while alleviating shock between a gripped object (20) and an assembly target object (22). A robot hand (100) includes a hand (12), a displacement sensor (14), an estimation section, and a controller (16). The hand (12) includes an anti-slip mechanism at a contact portion with the gripped object (20) and a mechanism capable of anisotropic movement in three degrees of freedom under external force. The displacement sensor (14) is configured to detect a displacement amount of the hand (12) when an external force has been applied to the hand (12) from a state of mechanical equilibrium existing prior to application of the external force. Based on the displacement amount detected by the sensor, the estimation section is configured to estimate position-orientation-displacement amounts of the gripped object (20) when the gripped object (20) is being assembled to an assembly target object (22). The controller (16) includes a control section configured to control the hand (12) based on the position/orientation-displacement amounts of the gripped object as estimated by the estimation section so as to assemble the gripped object (20) to the assembly target object (22).

FIG.7

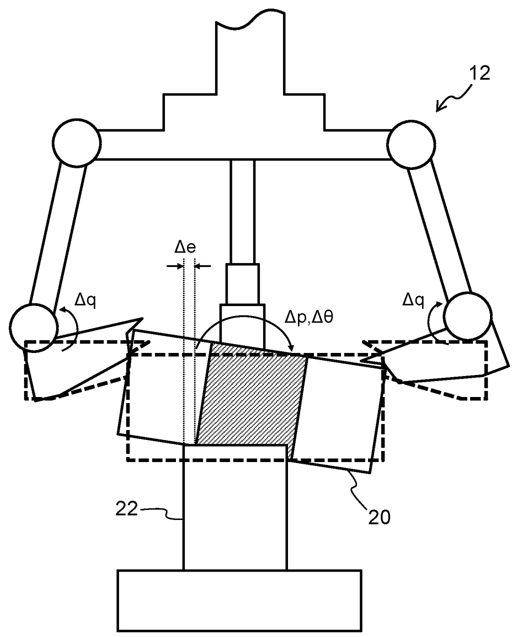


EP 3 943 257 A1

## Description

### Technical Field

The present invention relates to a robot hand, a robot hand control method, and a robot hand control program.

### Background Art

Technology relating to control of robot hands has been proposed for cases in which a robot hand is used to grip a gripped object such as a workpiece, to convey the gripped object or to assemble the gripped object to an assembly target object.

For example, technology using a three-fingered multi-jointed robot hand and a camera has been proposed for estimating a state such as a position and angle of an object, and controlling the robot hand based on the state of the object (Non-Patent Document 1).

A grip-type hand has also been proposed. The grip-type hand includes plural finger mechanisms, each including a finger joint, an actuator for driving the finger joint, and a link supported by the finger joint and operated under the driving force of the actuator. The grip-type hand further includes an action control section capable of independently controlling the actuators of the plural finger mechanisms, a position detection section that detects an operating position of the respective finger joints in the plural finger mechanisms, and a strain detection section provided to each of the plural finger mechanisms to detect strain occurring in the link under force applied to the finger mechanism. The action control section of the grip-type hand adjusts the gripping force generated by the plural finger mechanisms by coordinated control of the actuators of the plural finger mechanisms based on the operating positions of the finger joints detected by the position detection section and on the strain on the link detected by the strain detection section.

### Prior Art Literature

### Patent Document

Patent Document 1: Japanese Patent Application Laid-Open (JP-A) No. 2006-102920

### Non-Patent Document:

Non-Patent Document 1: "Cooperative Operation between a Human and a Robot based on Real-time Measurement of Location and Posture of Target Object by High-Speed Vision" by Yutaro Matsui, Yuji Yamakawa, and Masatoshi Ishikawa in 2017 IEEE Conference on Control Technology and Applications (CCTA), Aug. 27-30, 2017.

## SUMMARY OF INVENTION

### Technical Problem

The following issue arises in a conventional method to assemble a gripped object gripped by a robot hand to an assembly target object. Explanation follows regarding an example of a case in which a ring serving as a gripped object is assembled to a shaft, serving as an assembly target object, with reference to Fig. 24 to Fig. 27.

For example, as illustrated in Fig. 24, with an approach in which a two-fingered industrial gripper and a wrist kinesthetic sensor are combined (referred to hereafter as a "first approach"), the hardness and weight of the gripper and robot are transmitted directly to the gripped object. Accordingly, contact force during high-speed assembly results in shock, with a concern that this could damage or destroy the gripped object. This means that assembly tasks are not able to be speeded up.

Fig. 25 illustrates an approach capable of avoiding the issue with the first approach of the hardness of the gripper and robot. As illustrated in Fig. 25, an approach combining an industrial gripper and a wrist compliancer may be adopted (referred to hereafter as a "second approach"). This approach allows assembly tasks to be speeded up more than the first approach, but the issue of the weight of the gripper remains, and so has its limitations. Since positional alignment of the gripped object with the assembly target object inherently depends on a passive action of the gripped object under contact force received from the assembly target object, this limits the objects to which this approach may be applied. For example, in the example of Fig. 25, the direction of passive action under contact force (see the dashed line arrow in Fig. 25) with respect to the direction of contact force received by the gripped object from the assembly target object (see the continuous line arrows in Fig. 25) does not correspond to the direction of a positional alignment action.

Fig. 26 illustrates an approach capable of avoiding the remaining issue of the weight of the gripper as well as the issue of object limitation by combining a hand provided with a soft element with a visual sensor (referred to hereafter as a "third approach"). In the example of Fig. 26, the joints of the hand are configured by soft elements. In the third approach, since a relative position-orientation relationship between the gripped object and the assembly target object is acquired by the visual sensor, the permissible assembly conditions are limited due to the issue of occlusion. For example, in cases in which an assembly task area is inside a case as illustrated in Fig. 26, the gripped object and the assembly target object may sometimes not be visible to a visual sensor situated outside the case. Moreover, a visual sensor above the assembly task area may sometimes not be able to accurately acquire a tilt of the gripped object and the assembly target object, resulting in the information obtained being insufficient to estimate the relative position-orientation relationship between the gripped object and the assembly target object.

Another approach capable of avoiding the occlusion issue of the third approach is to combine a soft element-attached hand and a finger kinesthetic sensor (referred to hereafter as a "fourth approach"). This approach is often by application of the spherical fingertips as in the technology described in Non-Patent Document 1. As illustrated in Fig. 27, hysteresis slippage occurs between the gripped object and the fingertips under contact force between the gripped object and the assembly target object during high-speed assembly. Namely, slippage occurs such that the hand is not able to recover the original gripped orientation occurs due to the displaced state not returning to the original state even if the contact force becomes zero. This phenomenon makes even assembly difficult due to the detrimental effect on results of estimating the relative position-orientation between the gripped object and the assembly target obj ect.

In consideration of the above circumstances, an object of the present invention is to provide a robot hand, a robot hand control method, and a program capable of performing assembly tasks at high speed while alleviating shock between a gripped object and an assembly target object.

Solution to Problem

In order to achieve the above objective, a robot hand according to the present invention is configured including a hand including a gripped object anti-slip mechanism at a contact portion with a gripped object, and a mechanism capable of anisotropic movement in three degrees of freedom under external force, a sensor configured to detect a displacement amount of the hand when an external force has been applied to the hand from a state of mechanical equilibrium existing prior to application of the external force, an estimation section configured to estimate position/orientation-displacement amounts of the gripped object during assembly of the gripped object to an assembly target object based on the displacement amount detected by the sensor, and a control section configured to control the hand so as to assemble the gripped object to the assembly target object based on the position/orientation-displacement amounts of the gripped object as estimated by the estimation section.

In the robot hand according to the present invention, the hand includes the anti-slip mechanism against slippage of the gripped object at the contact portion with the gripped object, and includes the mechanism capable of anisotropic movement in three degrees of freedom under external force. The sensor detects the displacement amount of the hand when the external force has been applied to the hand from a state of mechanical equilibrium existing prior to application of the external force. Based on the displacement amount detected by the sensor, the estimation section estimates the position-orientation-displacement amounts of the gripped object when the gripped object is being assembled to the assembly target object. Based on the position/orientation-displacement amounts of the gripped object as estimated by the estimation section, the control section controls the hand so as to assemble the gripped object to the assembly target object. This enables assembly tasks to be performed at high speed, while also alleviating shock between the gripped object and the assembly target object.

Configuration may be made wherein the estimation section is configured to estimate relative position and orientation errors between the gripped object and the assembly target object based on the estimated position/orientation-displacement amounts of the gripped object, and the control section is configured to control the hand so as to assemble the gripped object to the assembly target object based on the position/orientation-displacement amounts of the gripped object as estimated by the estimation section, on the relative position and orientation errors, and on a predetermined action plan. This enables control of the hand to be achieved through simple control such that, for example, the relative position and orientation errors between the gripped object and the assembly target object become zero.

Configuration may be made wherein in a case in which the gripped object and the assembly target object have a relationship in which rotational error is also compensated by position error in a horizontal x-y plane being compensated, the estimation section is configured to estimate a relative position error between the gripped object and the assembly target object in the x-y plane from an x component and a y component of the orientation-displacement amount of the gripped object. This enables control of the hand to be achieved through simple control such that, for example, the relative position and orientation errors between the gripped object and the assembly target object become zero in the x-y plane.

Configuration may be made wherein the control section is configured to control the hand so as to assemble the gripped object to the assembly target object based on the position/orientation-displacement amounts of the gripped object as estimated by the estimation section and on a predetermined action plan. This enables control of the hand such that, for example, predetermined states are achieved for the position and orientation of the gripped object, to be achieved through simple control.

Configuration may be made wherein the anti-slip mechanism is configured by setting the contact portion with the gripped object so as to have a notched profile including a face to contact an upper portion of the gripped object and a face to contact a side face of the gripped obj ect.

Configuration may be made wherein the hand includes a suction pad at the contact portion with the gripped object. In such cases, the suction pad itself may be employed as the anti-slip mechanism.

Configuration may be made wherein the hand is configured by a clamp hand including plural finger portions each including a rotation mechanism to rotate the entire finger portion, or wherein the hand is configured by plural finger portions each having a fingertip portion controllable in position and orientation by a rotation angle of a joint.

A robot hand control method according to the present invention is applied to a robot hand including a hand equipped with a gripped object anti-slip mechanism at a contact portion with a gripped object and a mechanism capable of anisotropic movement in three degrees of freedom under external force, a sensor configured to detect a displacement amount of the hand when an external force has been applied to the hand from a state existing prior to application of the external force, an estimation section, and a control section. The control method includes the estimation section estimating position/orientation-displacement amounts of the gripped object during assembly of the gripped object to an assembly target object based on the displacement amount detected by the sensor, and the control section controlling the hand so as to assemble the gripped object to the assembly target object based on the position/orientation-displacement amounts of the gripped object as estimated by the estimation section.

A robot hand control program according to the present invention is a program that causes a computer to function as the estimation section and the control section configuring the above robot hand.

Advantageous Effects of Invention

The robot hand, method, and program according to the present invention are capable of performing assembly tasks at high speed while alleviating shock between a gripped object and an assembly target object by controlling the hand so as to assemble the gripped object to the assembly target object based on the position-orientation-displacement amounts of the gripped object during assembly as estimated from a displacement amount from a mechanical equilibrium state when external force has been applied to the hand.

BRIEF DESCRIPTION OF DRAWINGS

Fig. 1 is a schematic diagram illustrating configuration of a robot hand according to an exemplary embodiment.
Fig. 2 is a diagram to explain an example of an assembly task.
Fig. 3 is a diagram illustrating an example of an anti-slip mechanism of a hand.
Fig. 4 is a diagram illustrating another example of an anti-slip mechanism of a hand.
Fig. 5 is a block diagram illustrating a hardware configuration of a controller.
Fig. 6 is a block diagram illustrating a functional configuration of a controller.
Fig. 7 is a diagram to explain an outline of estimation by an estimation section.
Fig. 8 is a diagram illustrating an example of a mechanism of an $i^{th}$ finger.
Fig. 9 is a diagram to explain a positional displacement amount of a ring.
Fig. 10 is a diagram illustrating a relationship between vectors in a position-error direction and an orientation-displacement direction of a ring during two-point contact.
Fig. 11 is a diagram to explain relative position/orientation error.
Fig. 12 is a diagram to explain relative position/orientation error.
Fig. 13 is a diagram illustrating results of comparison between estimated values and actual values of e.
Fig. 14 is a flowchart illustrating a flow of robot hand control processing.
Fig. 15 is a sequence diagram illustrating an example of a ring fitting action plan.
Fig. 16 is a diagram illustrating an assembly action for connector insertion.
Fig. 17 is a sequence diagram illustrating an example of a connector insertion action plan.
Fig. 18 is a diagram to explain an assembly action for connector insertion.
Fig. 19 is a diagram illustrating an assembly action for peg insertion.
Fig. 20 is a diagram illustrating another example of a hand configuration.
Fig. 21 is a diagram to explain the other hand configuration example.
Fig. 22 is a diagram illustrating another example of a hand configuration.

Fig. 23 is a diagram to explain the other hand configuration example.
Fig. 24 is a diagram to explain issues with a convention method.
Fig. 25 is a diagram to explain issues with a convention method.
Fig. 26 is a diagram to explain issues with a convention method.
Fig. 27 is a diagram to explain issues with a convention method.

DESCRIPTION OF EMBODIMENTS

Explanation follows regarding an example of an exemplary embodiment of the present invention, with reference to the drawings. Note that the same or equivalent configuration elements and parts are allocated the same reference numerals in each of the drawings. The dimensions and proportions in the drawings may be exaggerated to facilitate explanation, and do not necessarily conform to actual proportions.

As illustrated in Fig. 1, a robot hand 100 according to the present exemplary embodiment is configured including an arm 10, a hand 12 attached to a leading end of the arm 10, a displacement sensor 14 to detect an angle of the joint between the arm 10 and the hand 12, and a controller 16 that controls actions of the arm 10 and the hand 12. The robot hand 100 executes an action to assemble a gripped object 20 gripped by the hand 12 to an assembly target object 22. As illustrated in Fig. 2, in the present exemplary embodiment explanation follows regarding the example of a case in which a ring serving as an example of the gripped object 20 is fitted onto a shaft serving as an example of the assembly target object 22. Note that the robot hand 100 is an example of a robot hand of the present invention.

The arm 10 is, for example, a vertical articulated mechanism with a configuration having the six degrees of freedom required for actions in three-dimensional space. Note that the arm 10 may be provided with seven degrees of freedom, in which a redundant degree of freedom is added to the six degrees of freedom. The arm 10 controls the position and orientation of the hand 12 in response to instructions from a controller 16.

The hand 12 includes an anti-slip mechanism at contact portions with the gripped object 20 to prevent slippage with respect to the gripped object 20, and includes a mechanism capable of anisotropic movement in three degrees of freedom under external force. In the present exemplary embodiment, the hand 12 is a multi-jointed mechanism with three fingers. The hand 12 includes a mechanism coupled with by joints, and grips an object by controlling the angles of the joints.

Each of the joints includes a joint drive actuator such as an electric motor and a joint drive actuator controller such as a microcomputer. The joint drive actuator controller decides a torque value of the joint drive actuator with which to grip the object with the fingertips of the hand 12 based on a value detected by the displacement sensor 14, described later. The joint drive actuator applies torque to joints based on torque values decided by the joint drive actuator controller.

Each of the joints has high back-drivability enabling allowing the joint to be back-driven by an external force arising during assembly, and accordingly enabling a mechanical point of equilibrium to be achieved by the joint drive actuator and the like. Back-drivability in an actuator or motive force transmission mechanism refers to an output joint being moved by an external force of when the external force is applied to the output joint. High back-drivability refers to an output joint moving even under a small external force. In a mechanical system in which displacement of a system of particles changes with time under a force, the mechanical point of equilibrium is a value of the displacement when a static state, not changing with time, is achieved under a condition of constant force.

The fingertips of the hand 12 are portions contacting the gripped object 20, and, as in an anti-slip mechanism such as illustrated in Fig. 3, each the fingertip has a notched profile including a face S1 that contacts an upper portion of the gripped object 20 and a face S2 that contacts a side face of the gripped object 20. Accordingly, hysteresis slippage between the gripped object 20 and the fingertip does not arise when an upward or lateral contact force is applied to the gripped object 20. As a result, displacement of the finger joints configuring the hand 12 from the mechanical point of equilibrium can be guaranteed to originate from external contact force (namely from the assembly target object 22) received by the gripped object 20.

The profile of the fingertips is not limited to being a v-shaped face S2 as illustrated in Fig. 3. For example, the face S2 may have a bowl shape as illustrated in Fig. 4. Any profile enabling high gripping stability may be applied in consideration of the profile of the gripped object 20.

The displacement sensor 14 is a sensor such as an encoder capable of detecting a current angle of a joint. In the present exemplary embodiment, the displacement sensor 14 outputs, to the controller 16, an amount of displacement of the joint from the mechanical point of equilibrium, namely a value obtained by subtracting an angle when contact force is not being applied to the gripped object 20 from an angle when contact force is applied thereto. Note that although in Fig. 1 only the displacement sensor 14 at one location is illustrated, a displacement sensor 14 is provided for each joint.

The controller 16 is implemented by an information processing device such as a computer. Fig. 5 illustrates a hardware configuration of the controller 16. As illustrated in Fig. 5, the controller 16 includes a central processing unit (CPU) 32, memory 34, a storage device 36, an input device 38, an output device 40, an optical disc drive device 42, and a communication interface (I/F) 44. The configuration elements are connected together through a bus so as to be capable of communicating with each other.

The storage device 36 is stored with a robot hand control program for executing robot hand control processing. The CPU 32 is a central processing unit for executing various programs, and for controlling the configuration elements. Namely, the CPU 32 reads a program from the storage device 36 and executes the program using the memory 34 as a workspace. The CPU 32 controls the configuration elements and performs various arithmetic processing according to the program stored in the storage device 36.

The memory 34 is configured by random access memory (RAM), and serves as a workspace that temporarily stores programs and data. The storage device 36 is configured by read only memory (ROM) and a hard disk drive (HDD) or solid state drive (SSD), and is stored with various programs including an operating system, as well as various data.

The input device 38 is a device such as a keyboard or mouse used to perform various input. The output device 40 is a device such as a display or a printer for outputting various information. The output device 40 may also function as the input device 38 by adopting a touch panel display configuration. The optical disc drive device 42 performs reading of data stored on various recording media (for example a CD-ROM or a Blu-Ray disc), and performs writing of data to the recording media.

The communication I/F 44 is an interface for communicating with other equipment, and employs a protocol such as Ethernet (registered trademark), FDDI, Wi-Fi (registered trademark), or the like.

Next, explanation follows regarding a functional configuration of the controller 16. As illustrated in Fig. 6, a functional configuration of the controller 16 includes a preparation section 50, an estimation section 52, and a control section 54. Each element of the functional configuration is implemented by the CPU 32 reading the robot hand control program stored in the storage device 36, expanding the robot hand control program in the memory 34, and executing the program.

The preparation section 50 performs preparation prior to assembly action. Specifically, the preparation section 50 acquires information required for assembly action, receives an action plan (described in detail later), and performs control and the like to grip the gripped object 20 with the hand 12 and move the hand 12 into the vicinity of an assembly task area.

Based on the displacement amounts detected by the displacement sensors 14, the estimation section 52 estimates amounts of displacement in the position and orientation of the gripped object 20 (referred to hereafter as "position/orientation-displacement amounts") of the gripped object 20 arising due to contact force received by the gripped object 20 from the assembly target object 22 when the gripped object 20 is being assembled to the assembly target object 22. Based on the estimated position/orientation-displacement amounts of the gripped object 20, the estimation section 52 also estimates an error in the relative positions and orientations between the gripped object 20 and the assembly target object 22 (referred to hereafter as "relative position/orientation error").

Explanation follows regarding an outline of the estimation performed by the estimation section 52, with reference to Fig. 7.

Based on the displacement amounts ($\Delta q$) of the joints of the hand 12 from their mechanical points of equilibrium as detected by the displacement sensors 14, the estimation section 52 estimates the position/orientation-displacement amounts ($\Delta p$, $\Delta\theta$) of the gripped object 20 arising due to contact force received by the gripped object 20 from the assembly target object 22. From the estimated position/orientation-displacement amounts ($\Delta p$, $\Delta\theta$) of the gripped object 20, the estimation section 52 then estimates a relative position/orientation error ($\Delta e$) between the gripped object 20 and the assembly target object 22. The definition of $\Delta e$ is different depending on the gripped object 20 and the assembly target object 22 employed, and depending on the action plan for assembling the gripped object 20 to the assembly target object 22.

The action plan is a transition of states based on sensor values to reliably (and in some cases quickly) complete a task such as assembly or the like. An estimation of states based on sensor values to execute each of the states combined with robot control based on estimation results is referred to as a "skill". Namely, the action plan refers to a process to achieve target states of a skill in addition to a simple motion plan for performing action generation alone. Note that the action plan may also be referred to as an action strategy.

Detailed explanation follows regarding estimation by the estimation section 52 for the example of a case in which the ring serving as the gripped object 20 is fitted onto the shaft serving as the assembly target object 22.

Based on the kinematics of the hand 12, a translational position pi of each fingertip is computed from a joint angle qi of each finger. Fig. 8 illustrates an example of a mechanism of an $i^{th}$ finger. The translational position pi of the fingertip is computed using the formula pi = $FK_{finger}(q_i)$, wherein joint angle $q_i = [q_{iIP}, q_{iMP}, q_{iTM}]^T$, and forward kinematics of the finger are denoted $FK_{finger}$. Next, the translational displacement $\Delta p_i$ of each fingertip is computed using the formula $\Delta p_i = p_{i0} - p_i$ wherein pio is an initial value of the translational position when the fingertip is unloaded. A positional displacement amount $\Delta p$ of the ring from its initial position/orientation is then found by averaging pi of the fingertips as in Equation (1) below.

$$\Delta p = \frac{1}{3}\sum_{i=1}^{3}(p_i - p_{io}) \qquad (1)$$

As illustrated in Fig. 9, the positional displacement amount $\Delta p$ of the ring corresponds to the difference ($\Delta X$, $\Delta Y$, $\Delta Z$) between a position of a ring center point (d1) under no contact force from the shaft and a position of the ring center point (d2) under contact force from the shaft.

Next, an orientation-displacement amount $\Delta\theta$ of the ring from its initial position/orientation is then found by the average of the first moment $p_i \times \Delta p_i$ of the displacement of each fingertip as in Equation (2) below.

$$\Delta\theta = \frac{1}{3}\sum_{i=1}^{3}(p_i \times \Delta p_i) \qquad (2)$$

Note that to obtain an amount equivalent to an angle, this should be divided by the radius. However, absolute precision regarding the angle is not needed when performing control with relative position-error compensation with respect to the shaft as a control base, and is therefore omitted.

When fitting the ring onto the shaft, if position error in an x-y plane is compensated for, then rotational error will also be passively compensated for due to the geometric relationship between the ring and the shaft. It is thus sufficient to be able to estimate a position-error direction e between the ring and the shaft. e is computed from the orientation-displacement amount $\Delta\theta$ of the ring based on geometric constraint conditions for two-point contact between the ring and the shaft. Fig. 10 illustrates a relationship between a vector of the position-error direction and a vector in the orientation-displacement direction of the ring during two-point contact. The two vectors are orthogonal to each other in the top view (of the x-y plane) illustrated in Fig. 10. This orthogonal relationship is used to estimate e from $\Delta\theta$ according to Equation (3) below.

$$e = \begin{bmatrix} e_x \\ e_y \\ e_z \end{bmatrix} = \frac{1}{\sqrt{\Delta\theta_x^2 + \Delta\theta_y^2}} \begin{bmatrix} \Delta\theta_y \\ -\Delta\theta_x \\ 0 \end{bmatrix} \qquad (3)$$

As illustrated in Fig. 11, e is a vector from a center point (d3) of the shaft to a center point (d4) of the ring, and as illustrated in Fig. 12, there is two-dimensional information in the x-y plane and so $e_z = 0$ is employed to match dimensions in Equation (3).

Fig. 13 illustrates results of a comparison between values of e as estimated by the estimation section 52 and actual values of e. It is apparent therefrom that estimation precision is sufficient for feedback to control an assembly task in a robot action. As described above, anti-slip mechanisms are provided to the fingertips of the hand 12, and so hysteresis slippage does not arise between the gripped object 20 and the fingertips when upward or lateral contact force is applied to the gripped object 20. Displacement of the joints of the fingers configuring the hand 12 from their mechanical points of equilibrium is therefore guaranteed to be due to contact force received by the gripped object 20 from the assembly target object 22, thereby enabling such estimation to be performed with good precision.

The control section 54 controls the arm 10 and the hand 12 so as to assemble the gripped object 20 to the assembly target object 22 based on the position/orientation-displacement amounts of the gripped object 20 estimated by the estimation section 52, on the relative position/orientation error between the gripped object 20 and the assembly target object 22, and on a predetermined action plan. Specifically, the control section 54 employs the position/orientation-displacement amounts ($\Delta p$, $\Delta\theta$) as constraint conditions to control the hand 12 such that the relative position/orientation error ($\Delta e$) becomes zero.

Next, explanation follows regarding operation of the robot hand 100 according to the present exemplary embodiment.

Fig. 14 is a flowchart illustrating a flow of robot hand control processing executed by the CPU 32 of the controller 16. The CPU 32 reads the robot hand control program from the storage device 36 and expands the robot hand control program in the memory 34. The CPU 32 functions as each of the functional configuration elements of the controller 16 by executing the robot hand control processing illustrated in Fig. 14.

First, at step S12, the preparation section 50 acquires information relating to the type, dimensional parameters, positions, and the like of the gripped object 20 and of the assembly target object 22. This information may be acquired from CAD data input in advance, or may be acquired as information input by a user.

At the next step S14, the preparation section 50 receives, from the user, a grip orientation of the gripped object 20 and an action plan for assembling the gripped object 20 to the assembly target object 22, and decides on the grip orientation and action plan.

At the next step S16, the preparation section 50 makes the hand 12 approach the gripped object 20, and causes the gripped object 20 to be gripped with the hand 12 at the grip orientation decided on at step S14.

At the next step S18, the preparation section 50 lifts the gripped object 20 up as far as a position where a no contact state is achieved, except for at the fingertips of the hand 12. Namely, creates a mechanical point of equilibrium.

At the next step S20, the preparation section 50 acquires the angles $q_{i0}$ of the respective joints from the displacement sensors 14 of the respective joints, computes the initial values $p_{i0}$ expressing the mechanical point of equilibrium using the formula pio = $FK_{finger}$ ($q_{i0}$), and stores the result in a predetermined storage region.

At the next step S22, based on the position of the assembly target object 22 acquired at step S12, the preparation section 50 controls the arm 10 and the hand 12 so as to cause the gripped object 20 gripped by the hand 12 to approach the assembly target object 22.

At the next step S30, the action plan decided on at step S14 is executed by the estimation section 52 and the control section 54.

Explanation follows regarding a ring fitting action plan for fitting the ring onto the shaft, with reference to Fig. 15. When the ring fitting action plan (S30) is started, whether or not a Z position of the ring has become a threshold Th or lower is monitored using state determination (S302). The threshold Th may be determined as a value of the Z position in a state in which the ring has been fitted onto the shaft. Moreover, when the ring fitting action starts a ring-shaft aligning skill (S304) is called.

The ring-shaft aligning skill is performed based on estimation by the estimation section 52 and control of the hand 12 by the control section 54. Specifically, according to the above Equation (1) to Equation (3), the estimation section 52 estimates a direction vector (e) of the ring center from the perspective of the shaft center, and a Z component ($\Delta Z$) of the displacement as the ring moves due to contact force from the shaft. The control section 54 then applies torque to each of the joints of the hand 12 to control the action of the hand 12 so that the gripped object 20 is moved at the speeds listed below in the respective directions X, Y, Z.

$$\text{Z direction speed: = target speed} - Gz \cdot \Delta Z \qquad \text{(Gz: constant gain)}$$

$$\text{XY direction speed: = } Gxy \cdot (-e) \qquad \text{(Gxy: constant gain)}$$

When the shaft center and the ring center are aligned with each other, the ring is fitted onto the shaft, and $Z \leq Th$ is determined by state determination. The ring-shaft aligning skill is then ended, thereby completing the ring fitting action plan.

As described above, in the robot hand according to the present exemplary embodiment, the hand includes the anti-slip mechanism against slippage between the gripped object at contact portions with the gripped object, and includes the mechanism capable of anisotropic movement in three degrees of freedom under external force. When applied with an external force, the hand is displaced from the state of mechanical equilibrium existing prior to application of the external force. The hand has back-drivability. The sensors detect displacement amounts, and based on the detected displacement amounts, estimations are made of the position/orientation-displacement amounts of the gripped object, and of the relative position/orientation error between the gripped object and the assembly target object. The hand is then controlled based on the estimated information so as to assemble the gripped object to the assembly target object.

In this manner, shock when contact is made between the gripped object and the assembly target object can be alleviated by the back-drivability of the hand, and displacement of the gripped object can also be induced when contact is made. Moreover, providing the anti-slip mechanisms to the fingertips enables hysteresis slippage to be suppressed when contact is made, and ensures the above displacement amounts are caused by the contact force received by the gripped object from the assembly target object. The above displacement amounts can accordingly be employed to control assembly task with good precision, thus enabling assembly tasks to be performed at high speed even when assembling objects together with little clearance, while also alleviating shock between the gripped object and the assembly target object.

The estimation by the estimation section is assumed to be fed back into the robot action so as to achieve a monotonic increase such as illustrated in Fig. 13. Namely, there is no need to provide high cost sensors since absolute precision of estimation is not required. Moreover, due to there being no need for absolute precision of estimation, estimation can be performed at high speed, enabling assembly action to be implemented under simple feedback control rules, such as speed proportional control. This enables the number of adjustment parameters employed in control to be reduced, and thus adjustments to be simplified.

Note that although explanation has been given in the exemplary embodiment described above regarding an example in which the gripped object is a ring, the assembly target object is a shaft, and the assembly action is fitting the ring onto the shaft, the present exemplary embodiment may be applied to other assembly actions.

For example, as illustrated in Fig. 16, the present exemplary embodiment may be applied to an assembly action in which a male connector is inserted into a female connector. In cases in which a gripped object of such a cuboidal shape is gripped by a three-fingered hand, as illustrated in Fig. 16, gripping can be stabilized by gripping a long edge portion with one finger and gripping corners opposing this long edge with the remaining two fingers, enabling the following action plan to be implemented.

Fig. 17 illustrates an example of an action plan for this scenario. As illustrated in Fig. 17, when a connector insertion action plan (S31) is started, whether or not $\Delta Z$ is a threshold Thz or higher is monitored by state determination (S312), and a Z face alignment skill (S314) is called.

In the Z face alignment skill, the estimation section 52 estimates movement displacements ($\Delta X$, $\Delta Y$, $\Delta Z$) of the gripped object 20 under contact force from the exterior using above Equation (1). The control section 54 then controls action of the hand 12 by applying torque to the respective joints of the hand 12 so as to move the gripped object 20 in the respective directions X, Y, Z at the following speeds.

$$\text{X direction speed: } = - Gx \cdot \Delta X$$

$$\text{Y direction speed: } = - Gy \cdot \Delta Y$$

$$\text{Z direction speed: } = \text{target speed} - Gz \cdot \Delta Z \text{ (Gx, Gy, Gz: constant gain)}$$

This is an action to abut the male connector in the Z direction at a position deliberately shifted in the XY directions, as illustrated in the upper row of Fig. 18. The force acting on the point A in Fig. 18 from the fingertips of the hand 12 acts as a moment to displace the orientation of the male connector very slightly about a rotation axis running along the line B by displacement so as to enter the female connector.

The state determination (S312) is completed when $\Delta Z \geq$ threshold Thz, the next state determination (S316) is started, monitoring is performed as to whether or not $\Delta X$ is a threshold Thx or greater, and an X face alignment skill (S318) is called.

In the X face alignment skill the estimation section 52 estimates displacement ($\Delta X$, $\Delta Y$, $\Delta Z$) similarly to in the Z face alignment skill (S314). The control section 54 then controls action of the hand 12 in the following manner.

$$\text{X direction speed: } = \text{target speed} - Gx \cdot \Delta X$$

$$\text{Y direction speed: } = - Gy \cdot \Delta Y$$

$$\text{Z direction speed: } = - Gz \cdot \Delta Z$$

As illustrated by the middle row of Fig. 18, shifting is performed in the X direction while pressing in the Z direction is continued, and the action is stopped when a certain degree of contact force in the X direction has been detected. In the example in Fig. 18, contact is made at the portion indicated by line C.

The state determination (S316) is completed when $\Delta X \geq$ threshold Thx, the next state determination (S320) is started, monitoring is performed as to whether or not $\Delta Y$ is a threshold Thy or greater, and a Y face alignment skill (S322) is called.

In the Y face alignment skill the estimation section 52 estimates displacement ($\Delta X$, $\Delta Y$, $\Delta Z$) similarly to with the Z face alignment skill (S314). The control section 54 then controls action of the hand 12 in the following manner

$$\text{X direction speed: } = - Gx \cdot \Delta X$$

$$\text{Y direction speed: = target speed - Gy} \cdot \Delta Y$$

$$\text{Z direction speed: = - Gz} \cdot \Delta Z$$

As illustrated by the bottom row of Fig. 18, shifting is performed in the Y direction while pressing in the Z direction and the X direction is continued, and the action is stopped once a certain degree of contact force has been detected in the Y direction. The portions indicated by line D make contact in the example in Fig. 18.

The state determination (S320) is completed when $\Delta Y \geq$ threshold Thy, the next state determination (S324) is started, monitoring is performed as to whether or not $\Delta Z$ is a threshold Thz1 or greater as well as whether or not Z is a threshold Thz2 or greater, and a Z face alignment skill (S326) is called. Note that in the state determination of S324, the state may be determined from the characteristics of a time series waveform of $\Delta Z$. The Z face alignment skill (S326) is similar to the Z face alignment skill (S314). This is an action of pushing-in in the Z direction while continuing to press with a very small contact force in the X direction and the Y direction, and stopping after pushing in by a certain amount in the Z direction.

As another example, the present exemplary embodiment may also be applied to an assembly action in which a peg is inserted into a hole as illustrated in Fig. 19. In cases in which a gripped object having such a circular column shape is gripped with a three-fingered hand, as illustrated in Fig. 19, gripping can be stabilized by disposing the fingers at 120° intervals around the circumference, enabling the following action plan to be implemented.

In the action plan for this scenario, the peg is pressed in the Z direction using a skill similar to the Z face alignment skill of the connector insertion action plan described above. Simple harmonic movements are induced in the X direction and the Y direction while continuing to press in the Z direction, and the average of estimated positional displacement amounts of the peg is employed as the center of these simple harmonic movements so as to align the axes of the peg and the hole. The positional displacement amount of the peg may be estimated using a similar method to that used to find the positional displacement amount $\Delta p$ of the ring.

Note that the relative position/orientation error between the gripped object 20 and the assembly target object 22 is not employed in the examples of connector insertion and peg insertion, meaning that the estimation section 52 estimates the positional displacement amount of the gripped object 20 alone.

Moreover, although explanation has been given in the above exemplary embodiment regarding a case in which the hand 12 has a multi-jointed multi-fingered configuration, and in which the profile of the fingertips of the hand 12, which are the contact portions with the gripped object 20, are profiled as the gripped object 20-anti-slip mechanism as illustrated in Fig. 3 or Fig. 4, there is no limitation thereto.

For example, as illustrated in Fig. 20, a configuration may be adopted in which a suction pad is employed as a hand including a gripped object anti-slip mechanism at contact portions with the gripped object, and including a mechanism capable of anisotropic movement in three degrees of freedom under external force. In such cases, as illustrated in Fig. 21, displacement sensors 14 capable of detecting as a suction pad-displacement amount a displacement amount with three degrees of freedom, including a push-in amount and two swivel amounts.

Moreover, for example, as illustrated in Fig. 22, a clamp hand may be employed that is provided with displacement sensor 14-attached suction pads mounted to the fingertips. In such cases, each of the plural finger portions (two in the example illustrated in Fig. 22) configuring the clamp hand preferably includes a rotation mechanism to rotate the entire finger portion. Moreover, as another example such as illustrated in Fig. 23, displacement sensor 14-attached suction pads may be provided to the fingertips of a multi-jointed multi-fingered hand.

Estimation and control using displacement amounts detected by the displacement sensors 14, and similar to in the exemplary embodiment described above, may be employed in any of the configurations described above.

The robot hand control processing executed in the exemplary embodiments described above by the CPU reading software (a program) may be executed by various types of processor other than a CPU. Such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). The robot hand control processing may be executed by any one of these various types of processor, or by a combination of two or more of the same type or different types of processor (such as plural FPGAs, or a combination of a CPU and an FPGA). The hardware structure of these various types of processors is more specifically an electric circuit combining circuit elements such as semiconductor elements.

Although explanation has been given regarding an implementation in which the robot hand control program is pre-stored (pre-installed) in a storage device in the exemplary embodiment described above, there is no limitation thereto. The program may be provided in a format recorded on a recording medium such as a compact disc read only memory (CD-ROM), digital versatile disc read only memory (DVD-ROM), or universal serial bus (USB) memory. Alternatively, the program may be provided in a format downloadable from an external device over a network.

Explanation of the Reference Numerals

| | |
|---|---|
| 10 | arm |
| 12 | hand |
| 14 | displacement sensor |
| 16 | controller |
| 20 | gripped object |
| 22 | assembly target object |
| 32 | CPU |
| 34 | memory |
| 36 | storage device |
| 38 | input device |
| 40 | output device |
| 42 | optical disc drive device |
| 44 | communication I/F |
| 50 | preparation section |
| 52 | estimation section |
| 54 | control section |

## Claims

**1.** A robot hand comprising:

a hand including a gripped object anti-slip mechanism at a contact portion with a gripped object, and a mechanism capable of anisotropic movement in three degrees of freedom under external force;
a sensor configured to detect a displacement amount of the hand when an external force has been applied to the hand from a state of mechanical equilibrium existing prior to application of the external force;
an estimation section configured to estimate position/orientation-displacement amounts of the gripped object during assembly of the gripped object to an assembly target object based on the displacement amount detected by the sensor; and
a control section configured to control the hand so as to assemble the gripped object to the assembly target object based on the position/orientation-displacement amounts of the gripped object as estimated by the estimation section.

**2.** The robot hand of claim 1, wherein:

the estimation section is configured to estimate relative position and orientation errors between the gripped object and the assembly target object based on the estimated position/orientation-displacement amounts of the gripped object; and
the control section is configured to control the hand so as to assemble the gripped object to the assembly target object based on the position/orientation-displacement amounts of the gripped object as estimated by the estimation section, on the relative position and orientation errors, and on a predetermined action plan.

**3.** The robot hand of claim 2, wherein:
in a case in which the gripped object and the assembly target object have a relationship in which rotational error is also compensated by position error in a horizontal x-y plane being compensated, the estimation section is configured to estimate a relative position error between the gripped object and the assembly target object in the x-y plane from an x component and a y component of the orientation-displacement amount of the gripped object.

**4.** The robot hand of claim 1, wherein the control section is configured to control the hand so as to assemble the gripped object to the assembly target object based on the position/orientation-displacement amounts of the gripped object as estimated by the estimation section and on a predetermined action plan.

**5.** The robot hand of any one of claim 1 to claim 4, wherein the anti-slip mechanism is configured by setting the contact portion with the gripped object so as to have a notched profile including a face to contact an upper portion of the gripped object and a face to contact a side face of the gripped object.

**6.** The robot hand of any one of claim 1 to claim 4, wherein the hand includes a suction pad at the contact portion with the gripped object.

**7.** The robot hand of any one of claim 1 to claim 6, wherein the hand is configured by a clamp hand including a plurality of finger portions each including a rotation mechanism to rotate the entire finger portion.

**8.** The robot hand of any one of claim 1 to claim 6, wherein the hand is configured by a plurality of finger portions each having a fingertip portion controllable in position and orientation by a rotation angle of a joint.

**9.** A robot hand control method for a robot hand including a hand equipped with a gripped object anti-slip mechanism at a contact portion with a gripped object and a mechanism capable of anisotropic movement in three degrees of freedom under external force, a sensor configured to detect a displacement amount of the hand when an external force has been applied to the hand from a state existing prior to application of the external force, an estimation section, and a control section, the control method comprising:

the estimation section estimating position/orientation-displacement amounts of the gripped object during assembly of the gripped object to an assembly target object based on the displacement amount detected by the sensor; and
the control section controlling the hand so as to assemble the gripped object to the assembly target object based on the position/orientation-displacement amounts of the gripped object as estimated by the estimation section.

**10.** A robot hand control program that causes a computer to function as the estimation section and the control section configuring the robot hand of any one of claim 1 to claim 8.

FIG.1

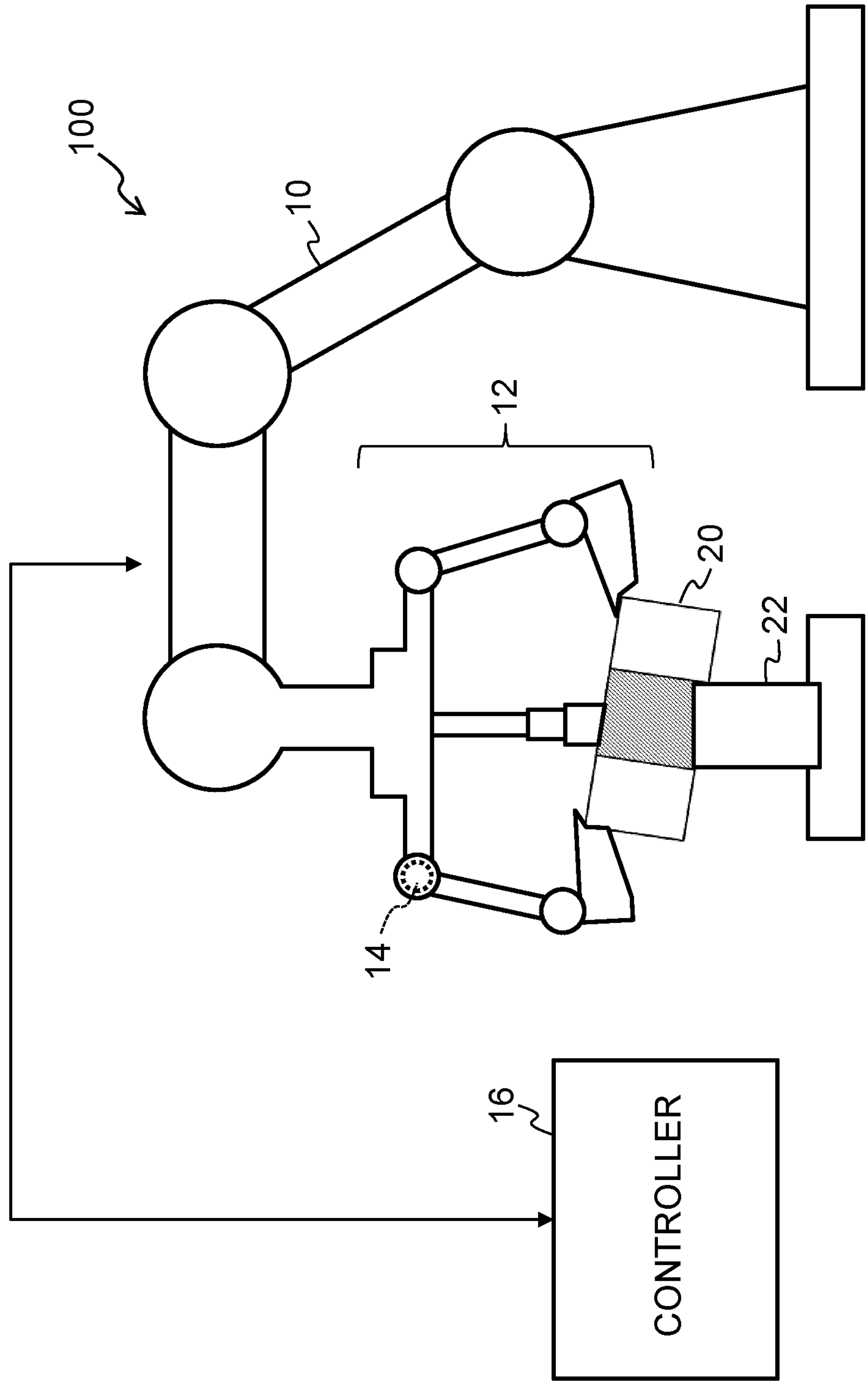

FIG.2

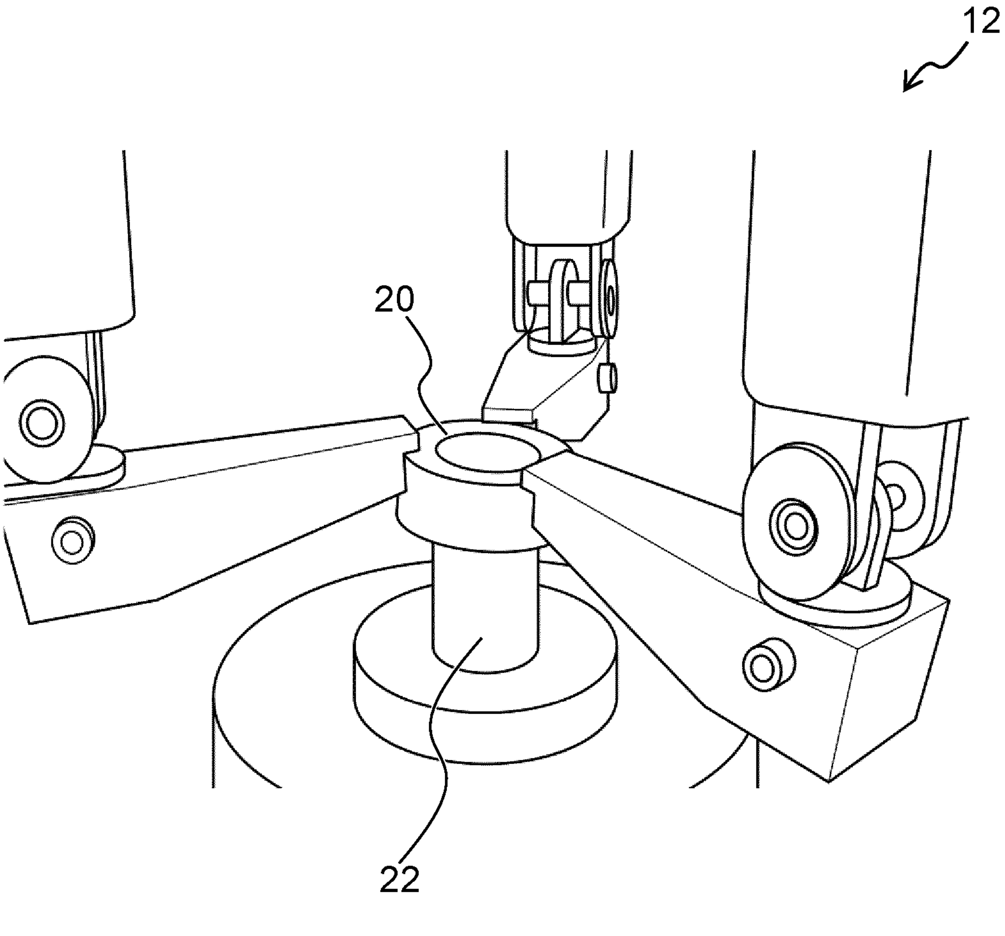

FIG.3

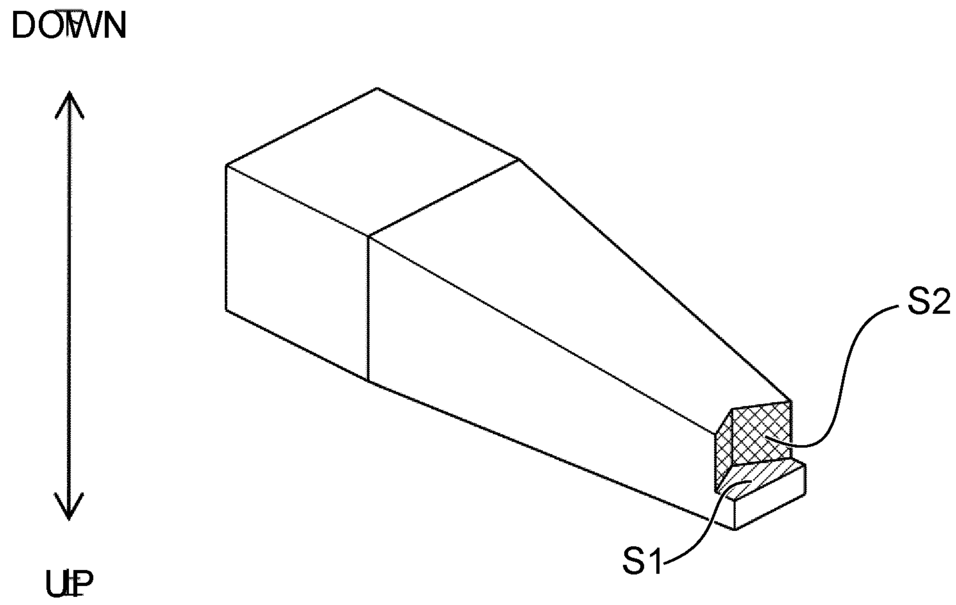

FIG.4

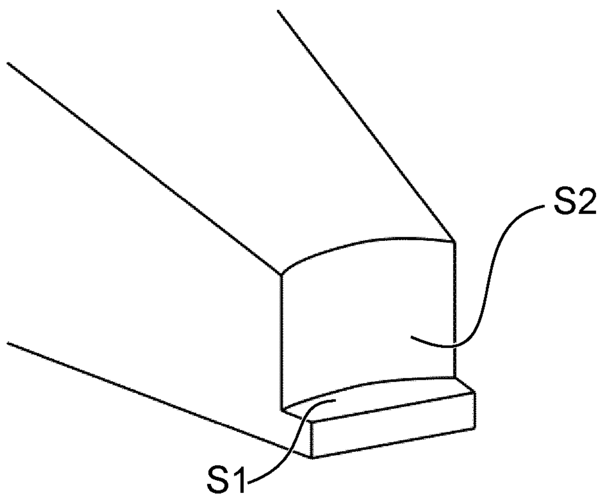

FIG.5

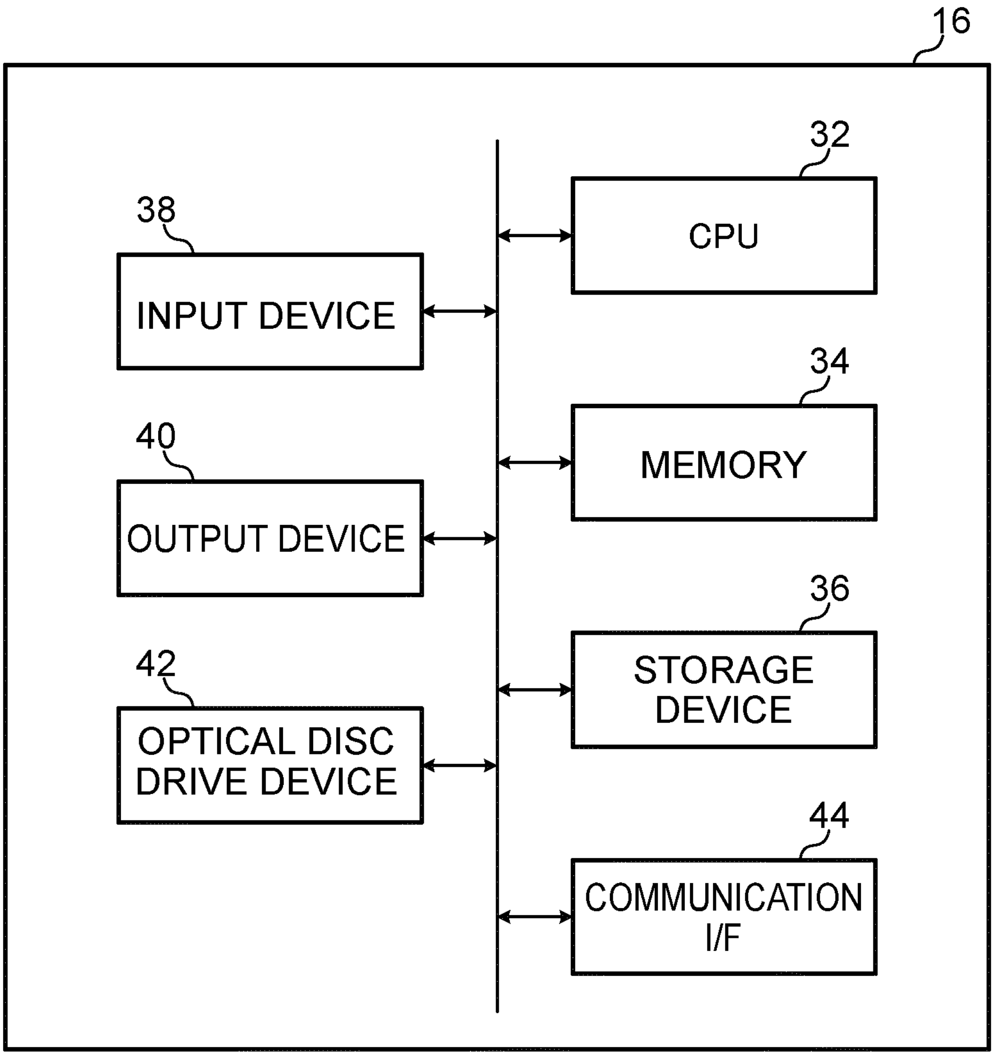
16
32
CPU
38
INPUT DEVICE
34
MEMORY
40
OUTPUT DEVICE
36
STORAGE DEVICE
42
OPTICAL DISC DRIVE DEVICE
44
COMMUNICATION I/F

FIG.6

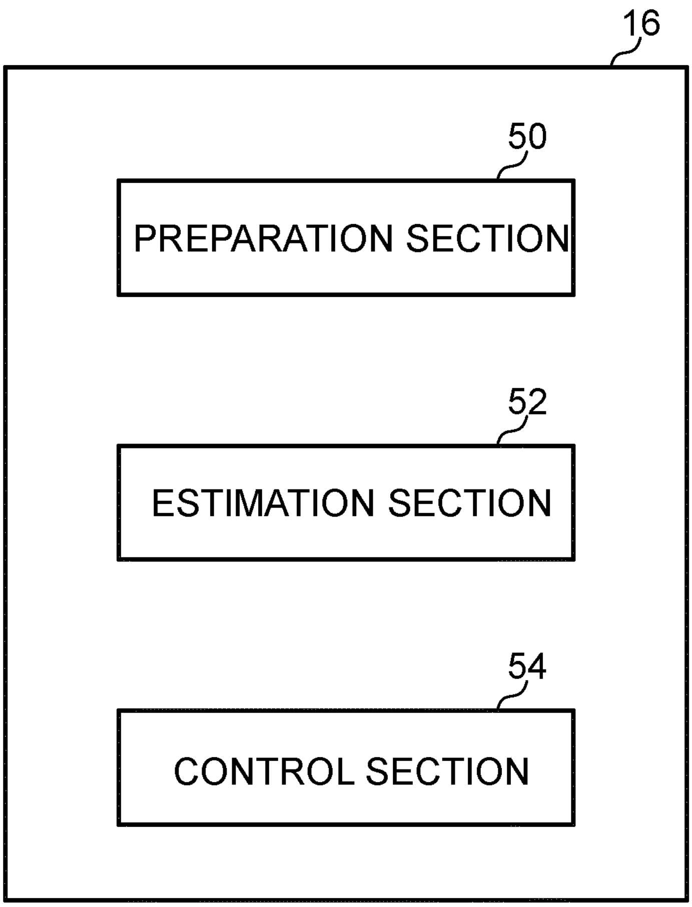
16
50
PREPARATION SECTION
52
ESTIMATION SECTION
54
CONTROL SECTION

FIG.7

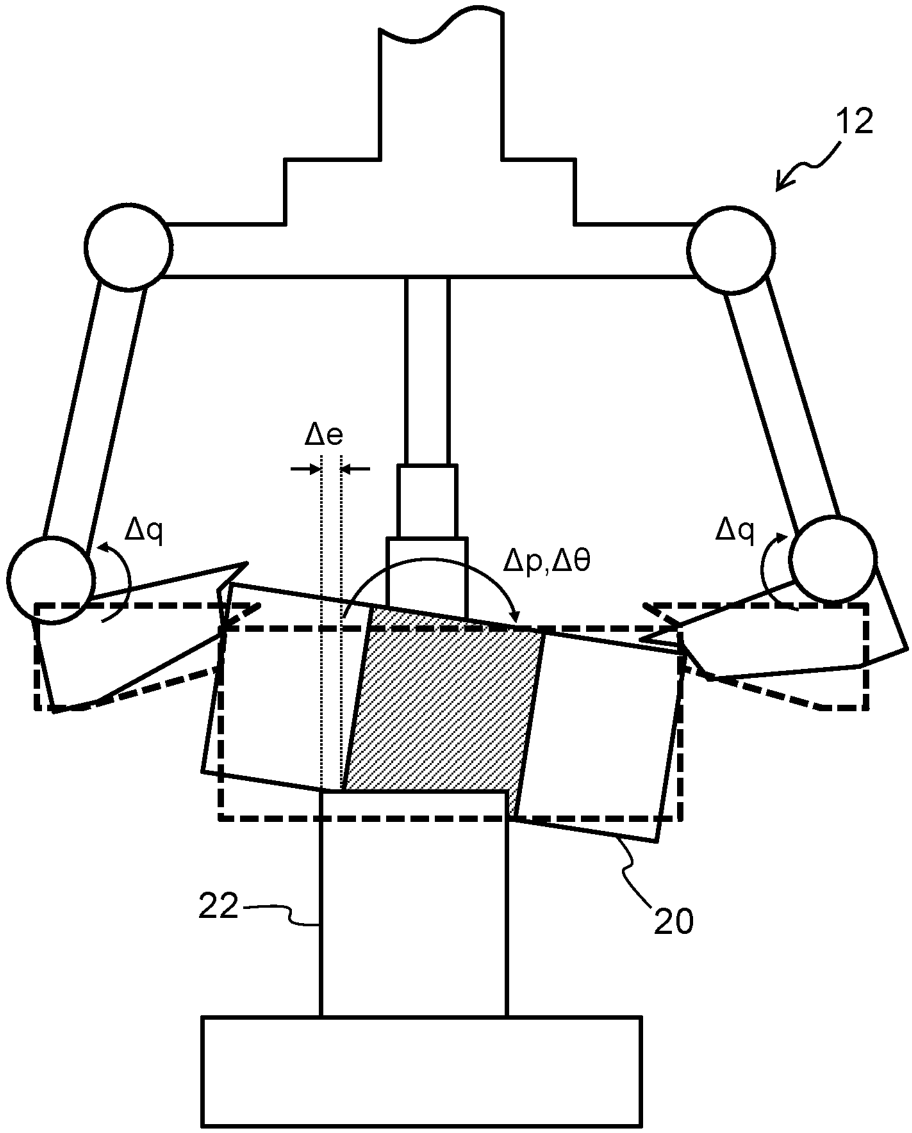

FIG.8

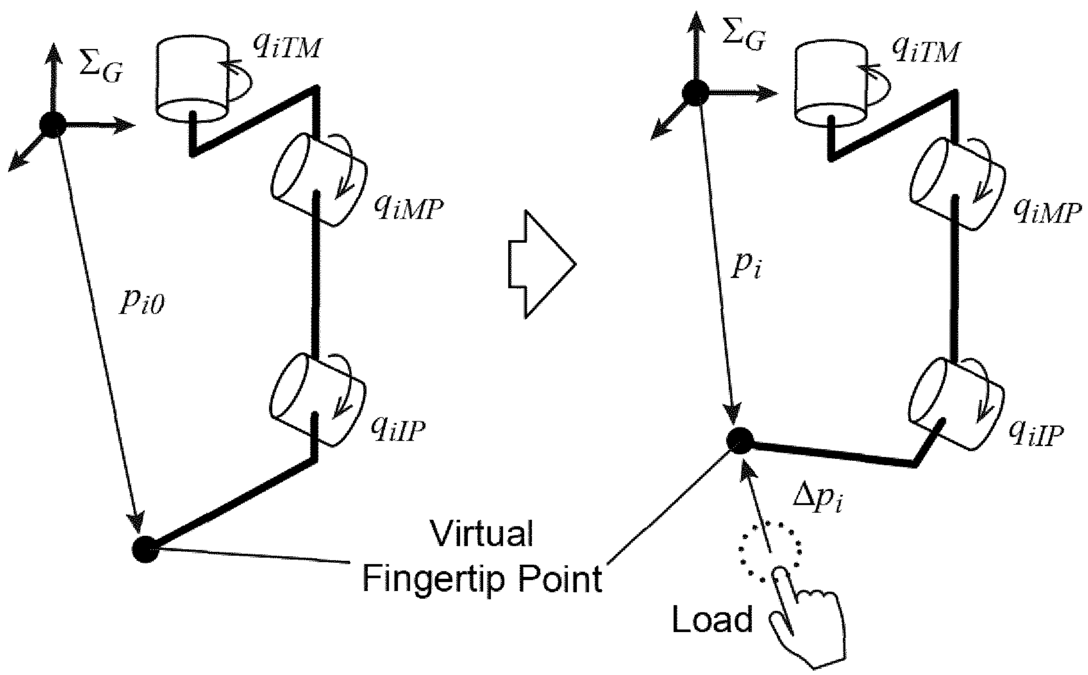
$\Sigma_G$
$q_{iTM}$
$q_{iMP}$
$p_{i0}$
$q_{iIP}$
$\Sigma_G$
$q_{iTM}$
$q_{iMP}$
$p_i$
$q_{iIP}$
$\Delta p_i$
Virtual
Fingertip Point
Load

FIG.9

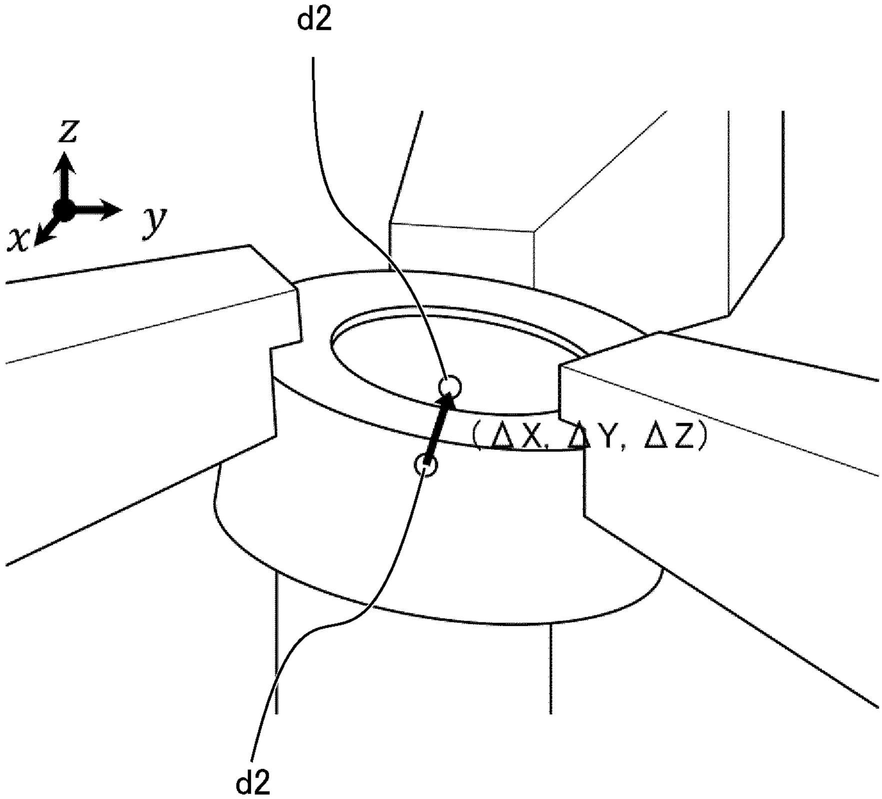

FIG.10

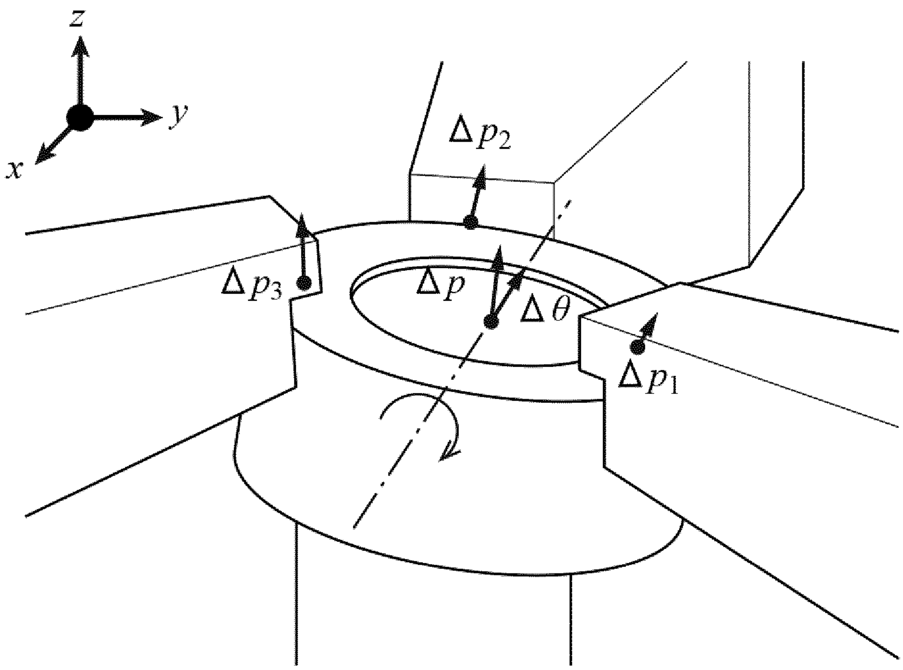


Diagonal View

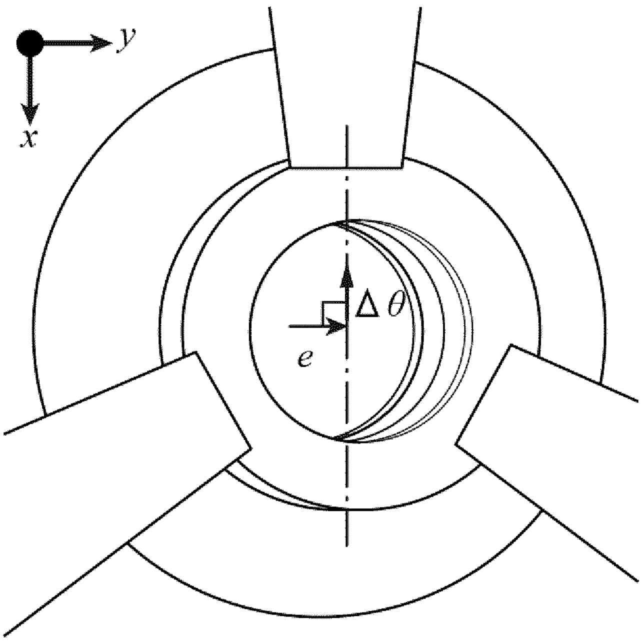


Top View

FIG.11

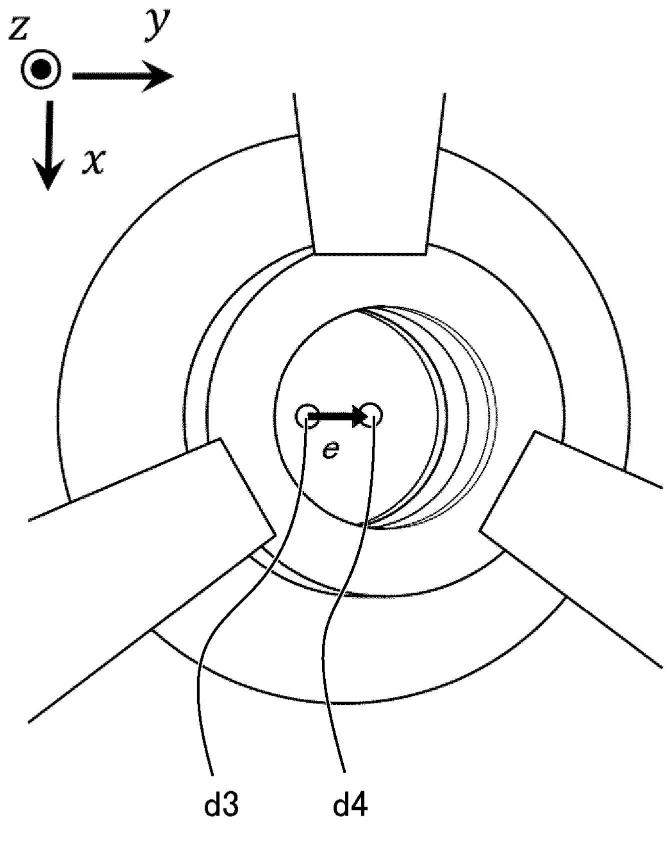

FIG.12

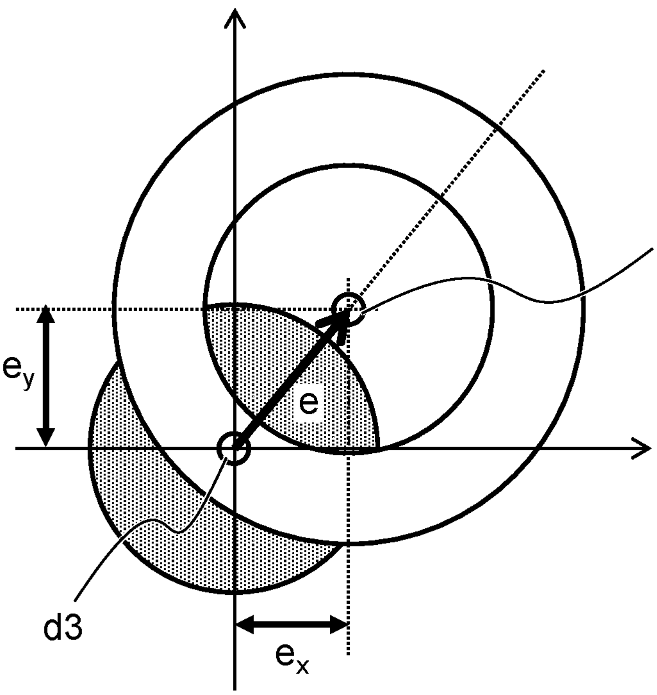

FIG.13

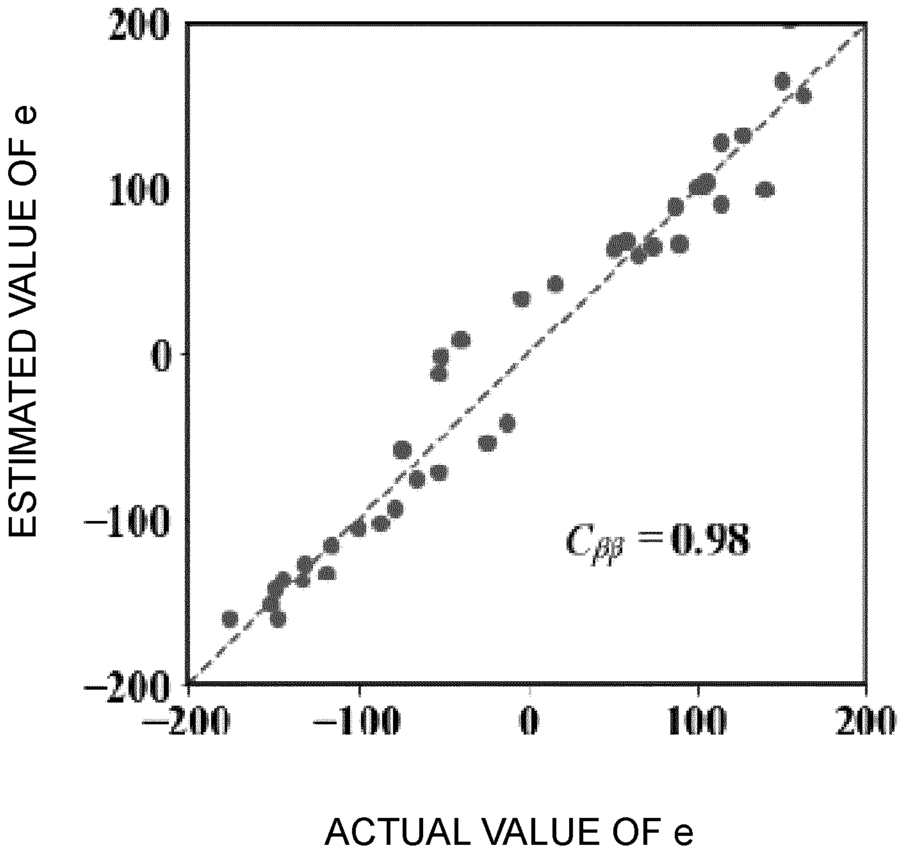
ESTIMATED VALUE OF e
200
100
0
−100
−200
−200
−100
0
100
200
$C_{\beta\beta}$ = 0.98
ACTUAL VALUE OF e

FIG.14

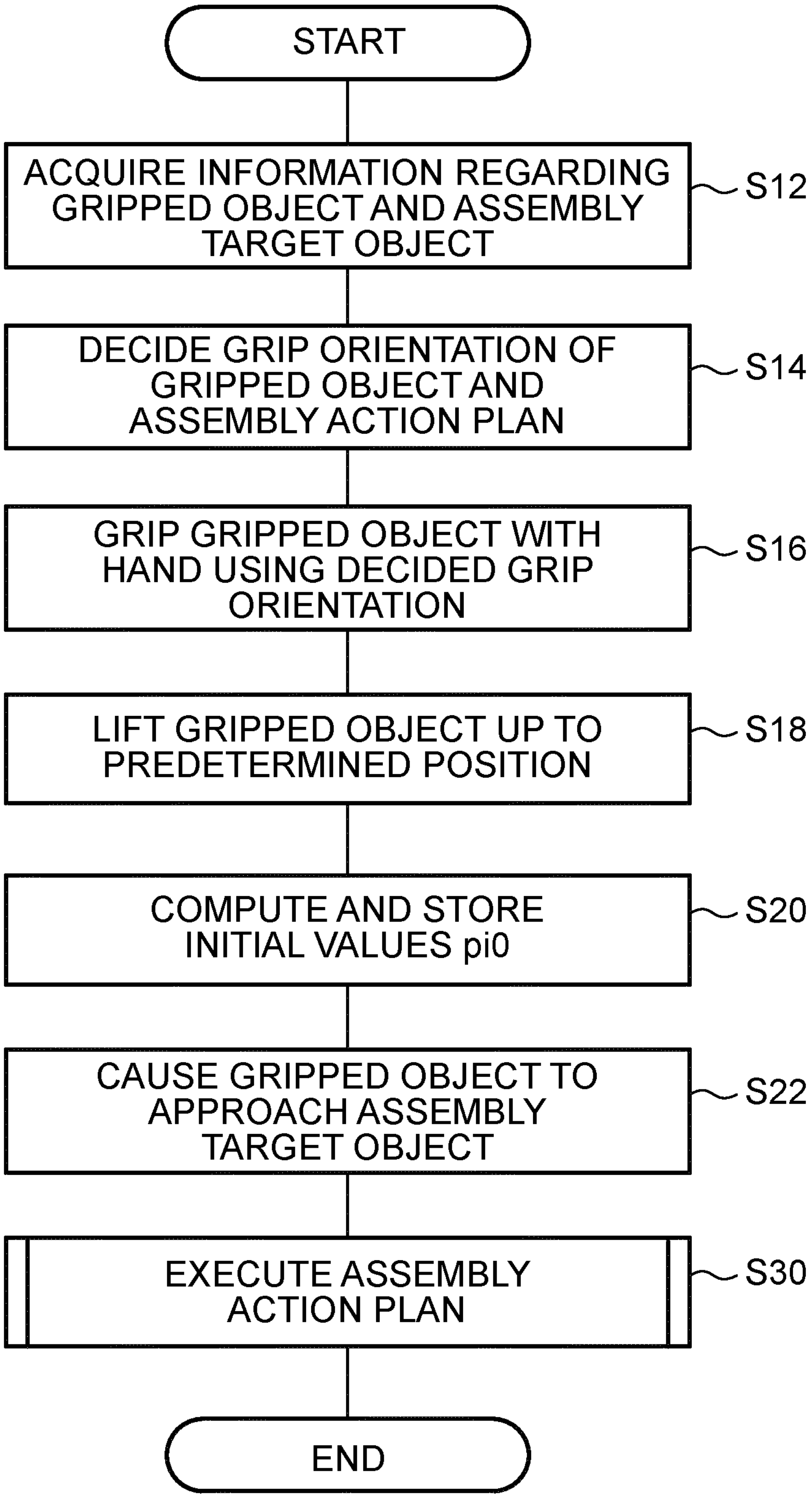
START
ACQUIRE INFORMATION REGARDING GRIPPED OBJECT AND ASSEMBLY TARGET OBJECT
S12
DECIDE GRIP ORIENTATION OF GRIPPED OBJECT AND ASSEMBLY ACTION PLAN
S14
GRIP GRIPPED OBJECT WITH HAND USING DECIDED GRIP ORIENTATION
S16
LIFT GRIPPED OBJECT UP TO PREDETERMINED POSITION
S18
COMPUTE AND STORE INITIAL VALUES pi0
S20
CAUSE GRIPPED OBJECT TO APPROACH ASSEMBLY TARGET OBJECT
S22
EXECUTE ASSEMBLY ACTION PLAN
S30
END

FIG.15

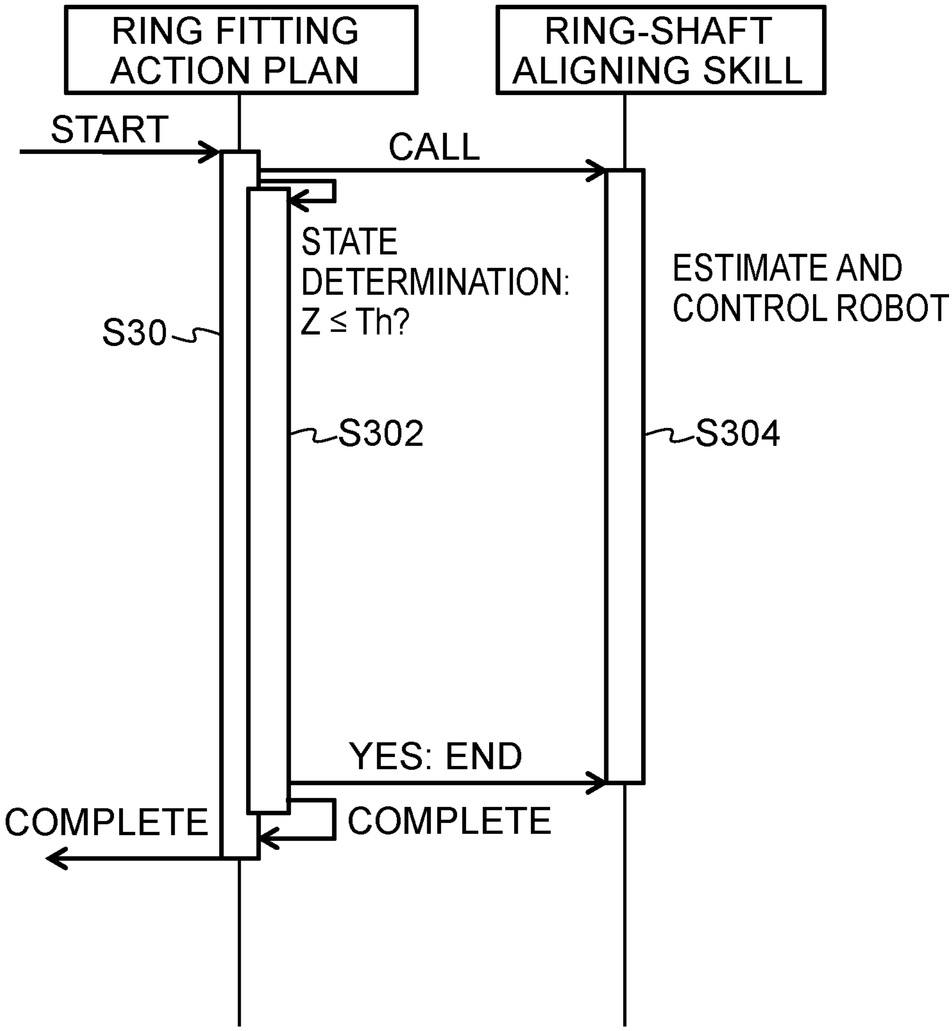
RING FITTING ACTION PLAN
RING-SHAFT ALIGNING SKILL
START
CALL
STATE DETERMINATION: Z ≤ Th?
ESTIMATE AND CONTROL ROBOT
S30
S302
S304
YES: END
COMPLETE
COMPLETE

FIG.16

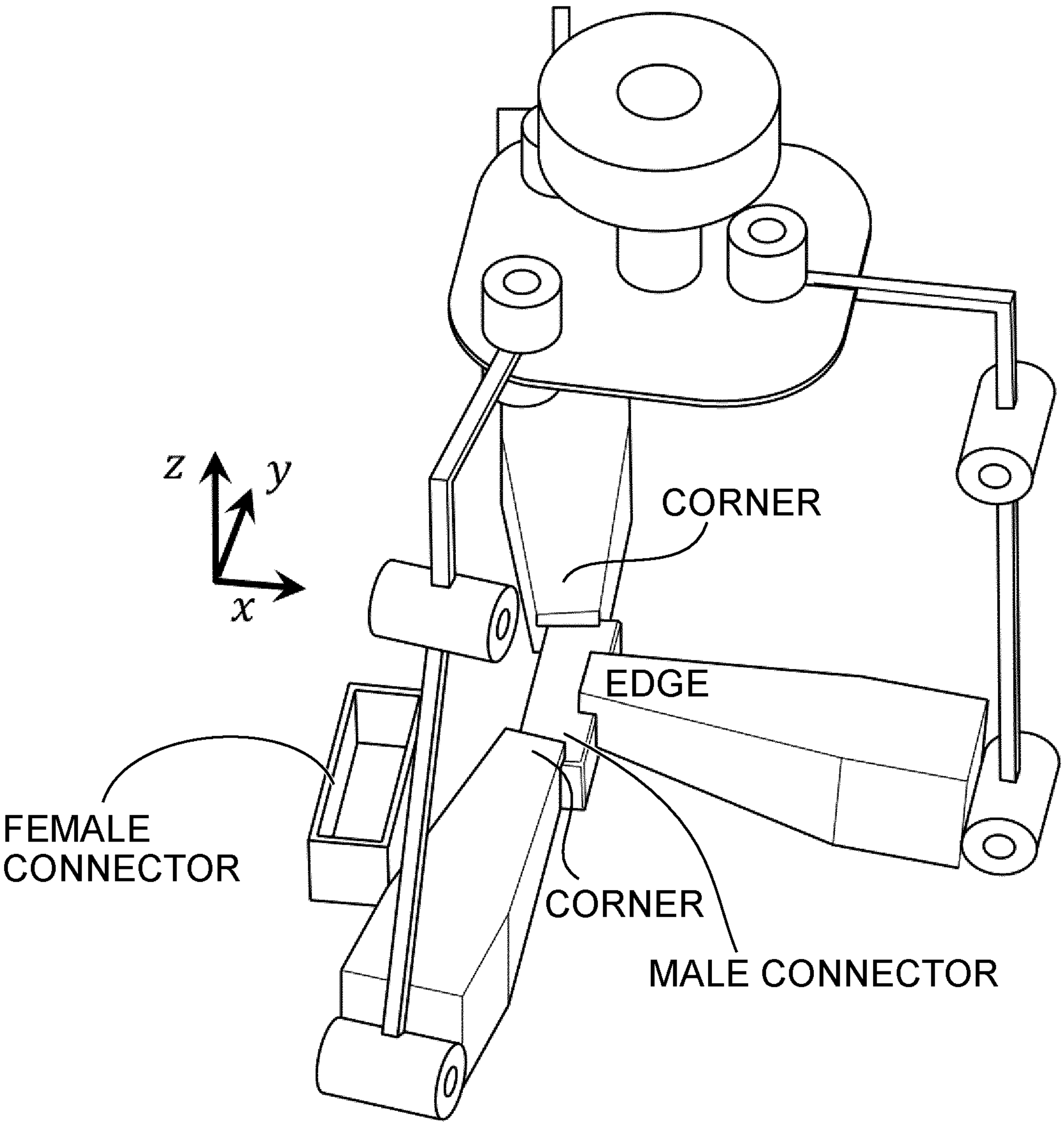

FIG.17

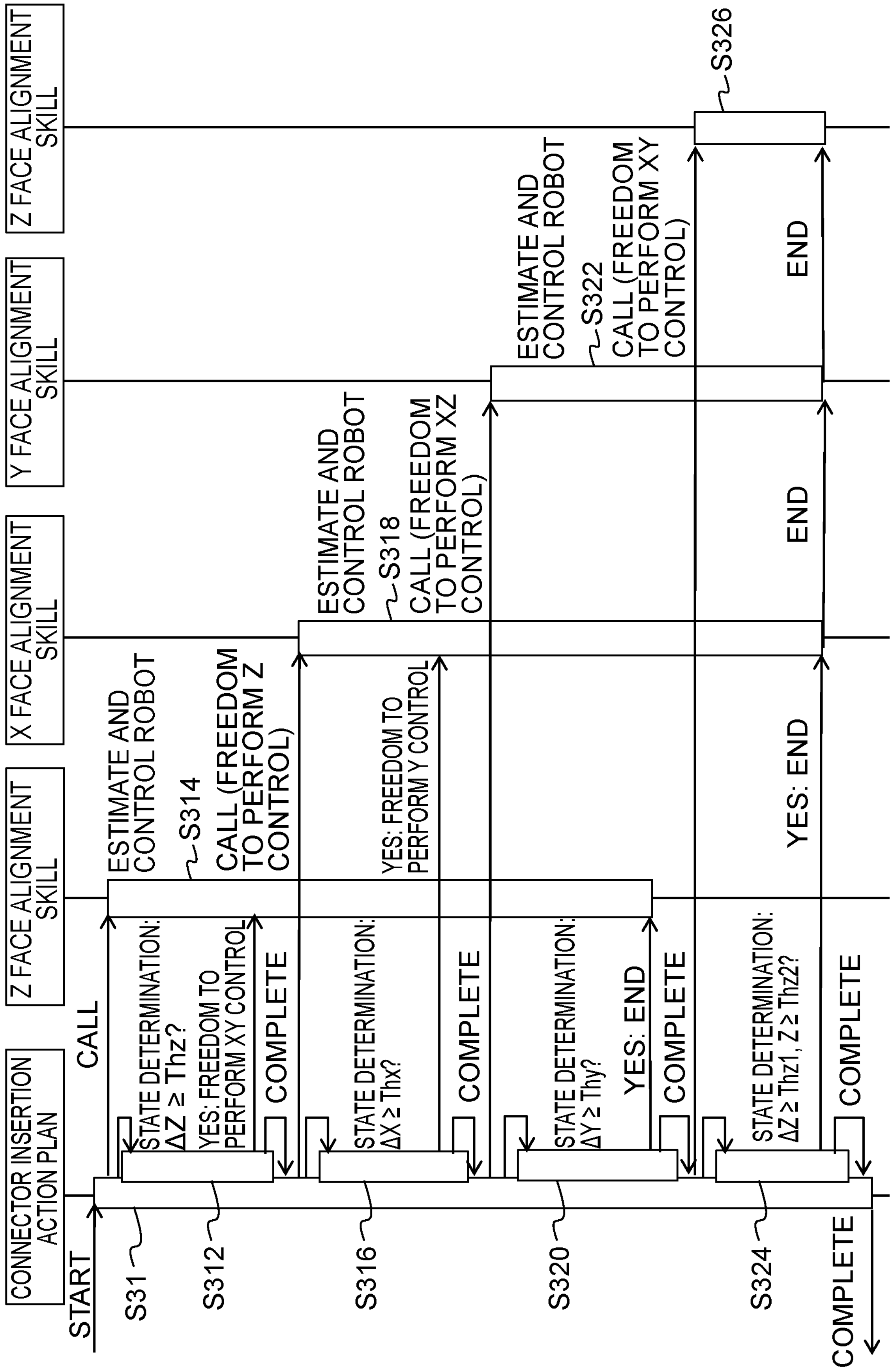
CONNECTOR INSERTION ACTION PLAN
Z FACE ALIGNMENT SKILL
X FACE ALIGNMENT SKILL
Y FACE ALIGNMENT SKILL
Z FACE ALIGNMENT SKILL
START
CALL
S31
S312
STATE DETERMINATION: ΔZ ≥ Thz?
YES: FREEDOM TO PERFORM XY CONTROL
ESTIMATE AND CONTROL ROBOT
S314
CALL (FREEDOM TO PERFORM Z CONTROL)
COMPLETE
S316
STATE DETERMINATION: ΔX ≥ Thx?
YES: FREEDOM TO PERFORM Y CONTROL
ESTIMATE AND CONTROL ROBOT
S318
CALL (FREEDOM TO PERFORM XZ CONTROL)
COMPLETE
S320
STATE DETERMINATION: ΔY ≥ Thy?
YES: END
ESTIMATE AND CONTROL ROBOT
S322
CALL (FREEDOM TO PERFORM XY CONTROL)
COMPLETE
S324
STATE DETERMINATION: ΔZ ≥ Thz1, Z ≥ Thz2?
S326
YES: END
END
END
COMPLETE
COMPLETE

FIG.18

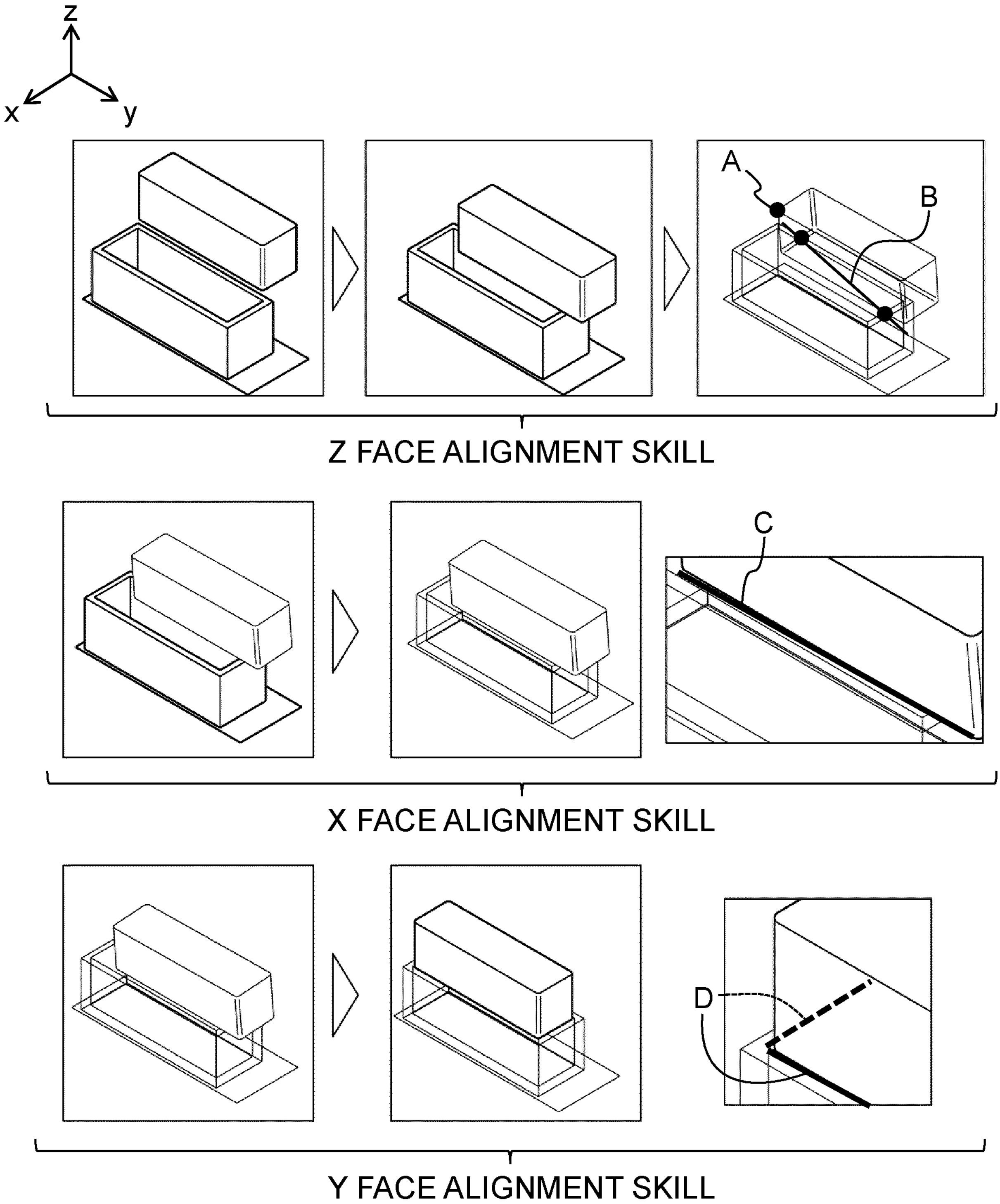
z
x
y
A
B
Z FACE ALIGNMENT SKILL
C
X FACE ALIGNMENT SKILL
D
Y FACE ALIGNMENT SKILL

FIG.19

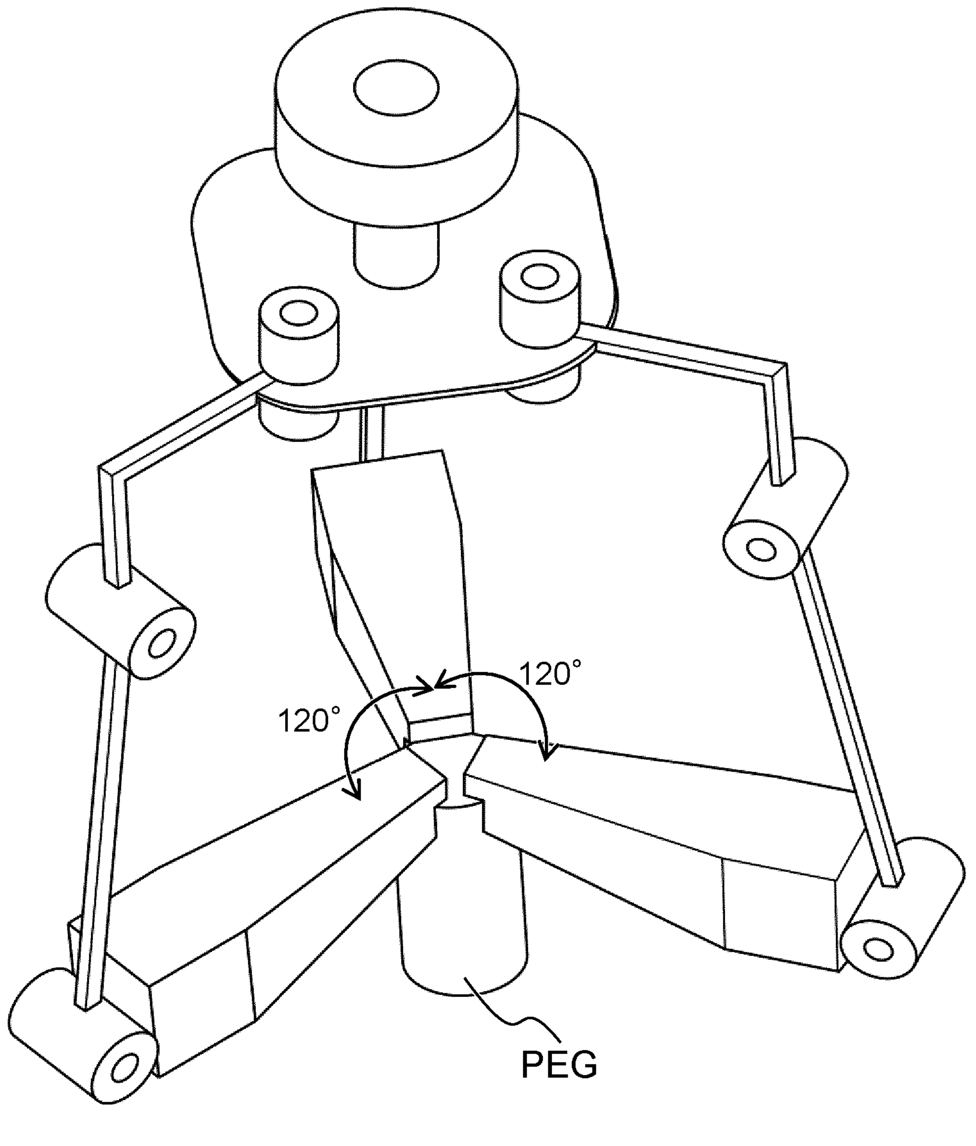

FIG.20

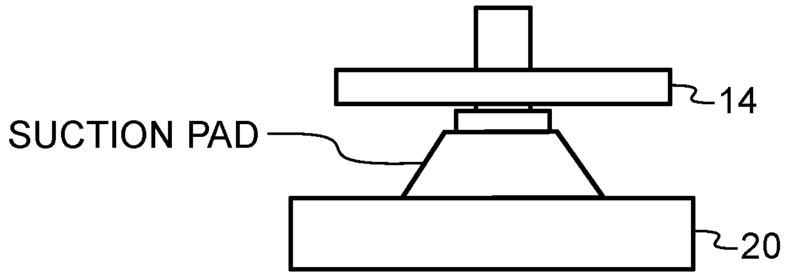

FIG.21

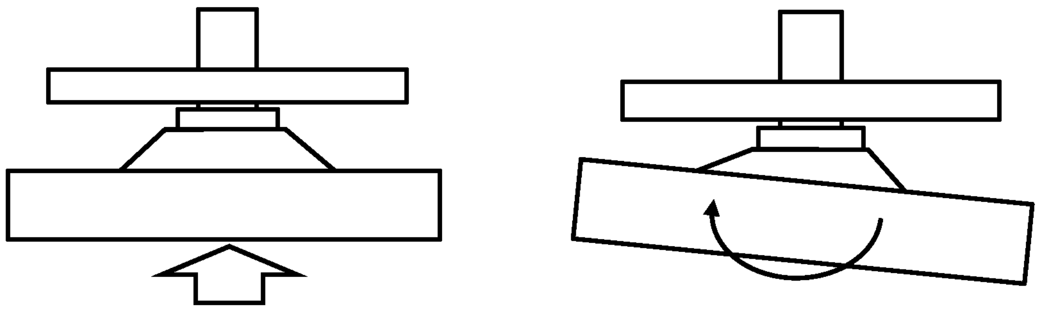

DEGREE OF FREEDOM 1:
PUSH-IN AMOUNT

DEGREES OF FREEDOM 2, 3:
SWIVEL AMOUNTS

FIG.22

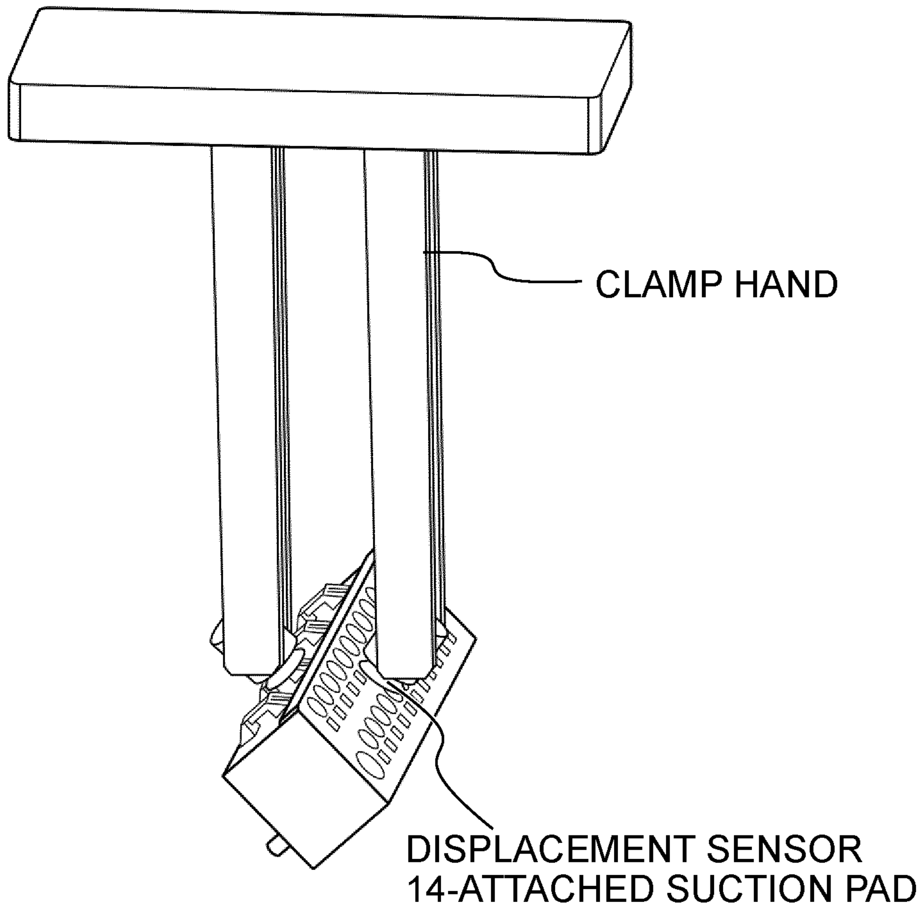

FIG.23

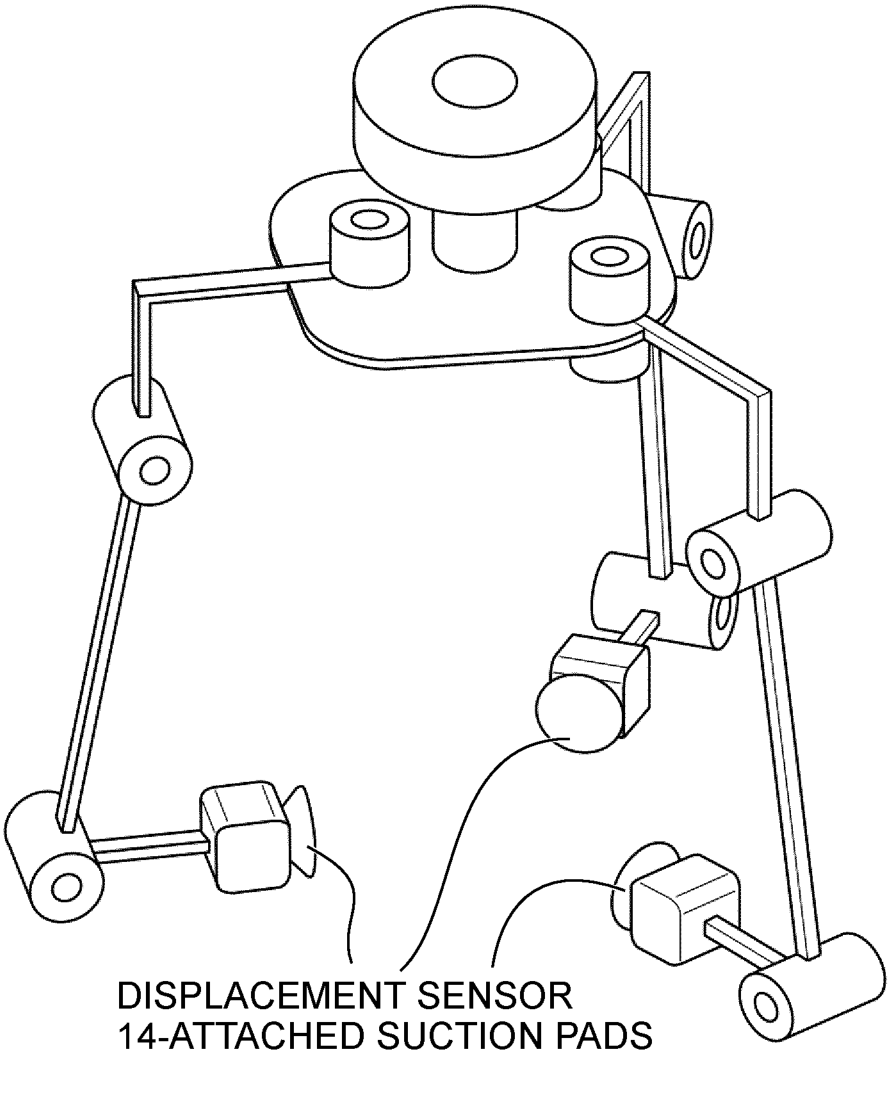

FIG.24

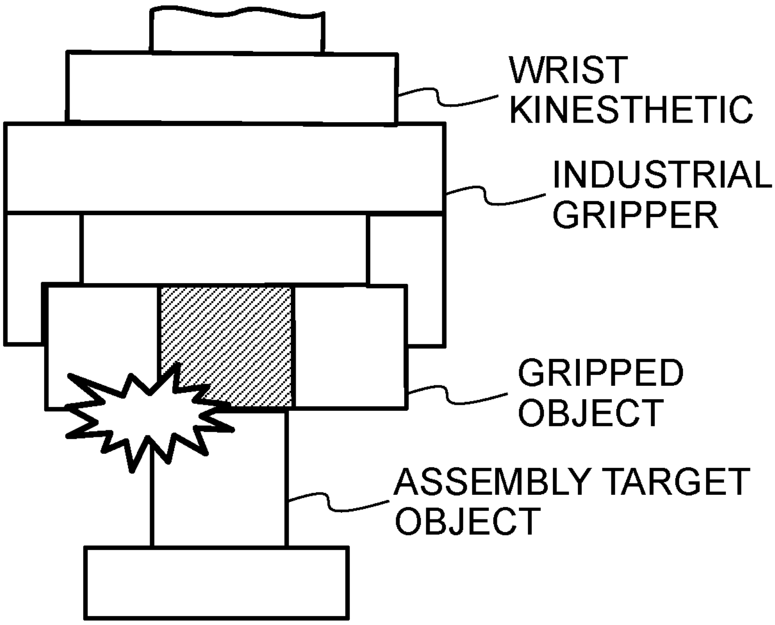
WRIST
KINESTHETIC
INDUSTRIAL
GRIPPER
GRIPPED
OBJECT
ASSEMBLY TARGET
OBJECT

FIG.25

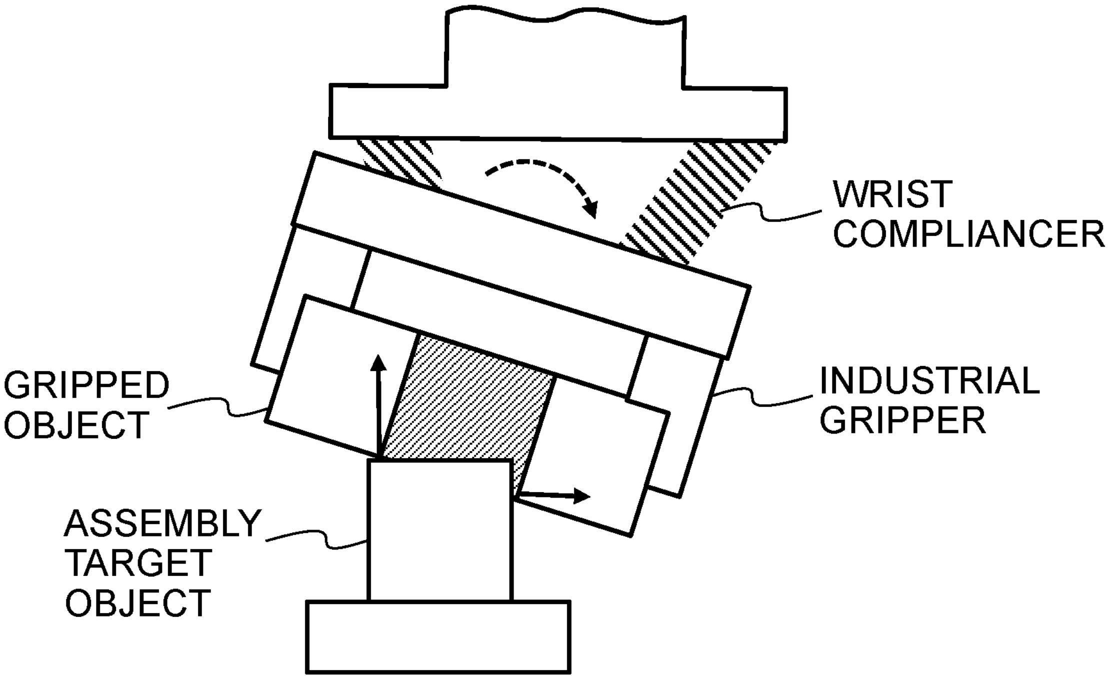
WRIST
COMPLIANCER
GRIPPED
OBJECT
INDUSTRIAL
GRIPPER
ASSEMBLY
TARGET
OBJECT

FIG.26

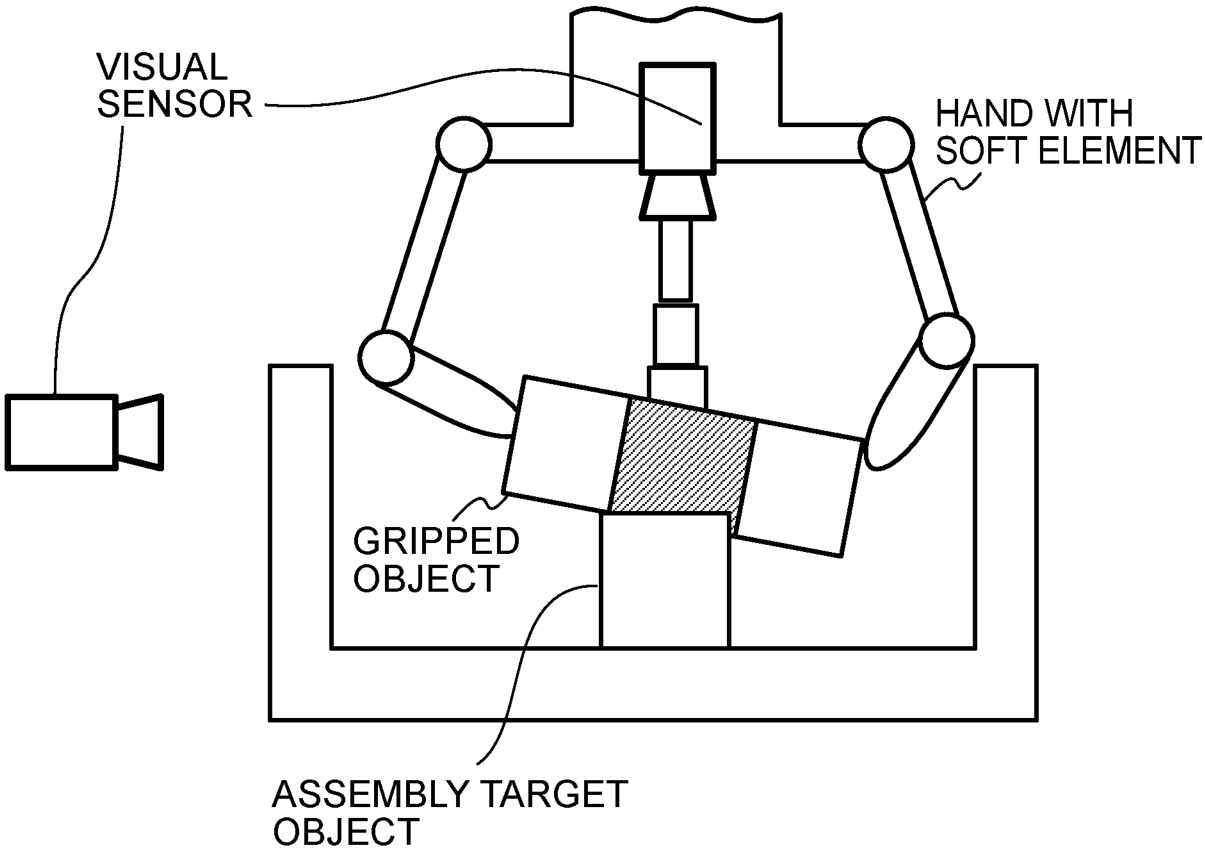
VISUAL
SENSOR
HAND WITH
SOFT ELEMENT
GRIPPED
OBJECT
ASSEMBLY TARGET
OBJECT

FIG.27

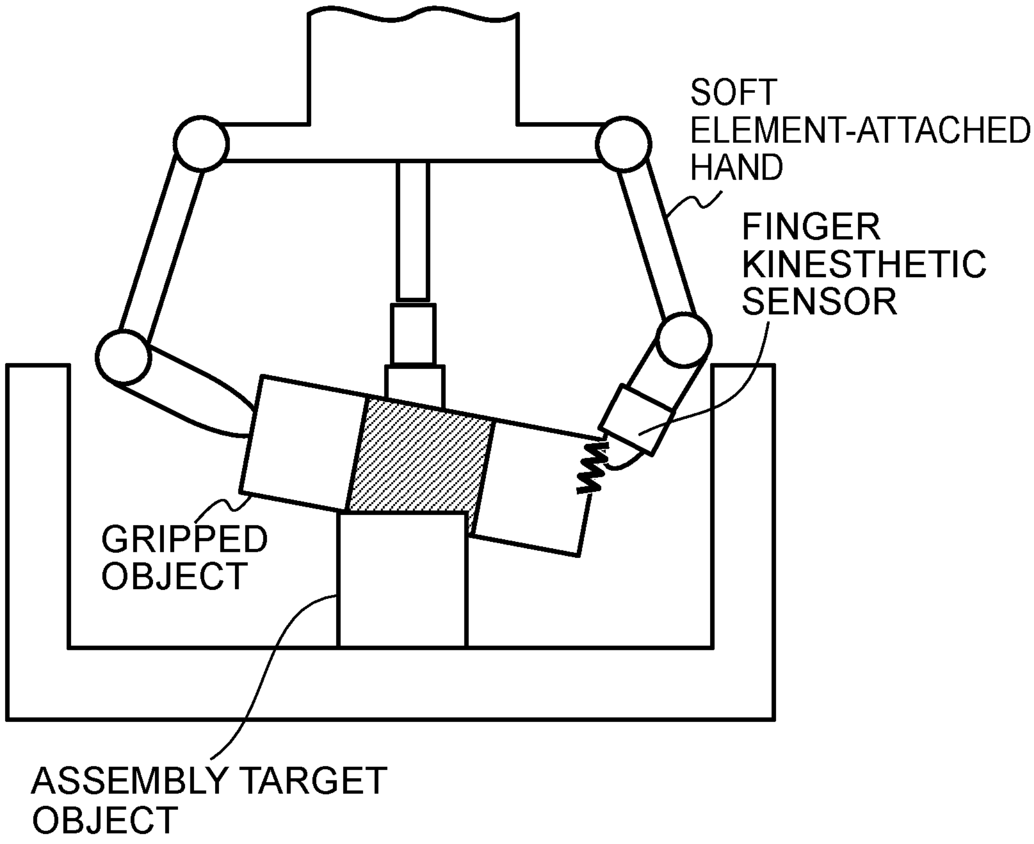
SOFT
ELEMENT-ATTACHED
HAND
FINGER
KINESTHETIC
SENSOR
GRIPPED
OBJECT
ASSEMBLY TARGET
OBJECT

## INTERNATIONAL SEARCH REPORT

International application No.
PCT/JP2019/012186

A. CLASSIFICATION OF SUBJECT MATTER
Int. Cl. B25J13/08(2006.01)i, B25J15/08(2006.01)i

According to International Patent Classification (IPC) or to both national classification and IPC

B. FIELDS SEARCHED

Minimum documentation searched (classification system followed by classification symbols)
Int. Cl. B25J1/00-21/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-33952 A (YASKAWA ELECTRIC CORP.) 09 February 1999, entire text, all drawings (Family: none) | 1-10 |
| A | JP 2018-192568 A (CANON INC.) 06 December 2018, entire text, all drawings & US 2018/0333858 A1, entire text, all drawings & EP 3403774 A1 & CN 108942917 A | 1-10 |
| A | JP 5-192887 A (ISHIKAWAJIMA-HARIMA HEAVY INDUSTRIES CO., LTD.) 03 August 1993, entire text, all drawings (Family: none) | 1-10 |
| A | JP 8-216080 A (TOSHIBA CORP.) 27 August 1996, entire text, all drawings (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04.06.2019 | 18.06.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006102920 A

### Non-patent literature cited in the description

- **YUTARO MATSUI ; YUJI YAMAKAWA ; MASATOSHI ISHIKAWA.** Cooperative Operation between a Human and a Robot based on Real-time Measurement of Location and Posture of Target Object by High-Speed Vision. *IEEE Conference on Control Technology and Applications (CCTA),* 2017